(19) Europäisches Patentamt / European Patent Office / Office européen des brevets

(11) **EP 4 495 396 B1**

(12) **EUROPEAN PATENT SPECIFICATION**

(45) Date of publication and mention
of the grant of the patent:
**03.12.2025 Bulletin 2025/49**

(21) Application number: **24189623.2**

(22) Date of filing: **19.07.2024**

(51) International Patent Classification (IPC):
$F01N\ 3/28$ *(2006.01)*      $F01N\ 9/00$ *(2006.01)*

(52) Cooperative Patent Classification (CPC):
**F01N 9/00; F01N 3/2892;** F01N 2240/20;
F01N 2330/06; F01N 2560/08; F01N 2900/1406;
F01N 2900/1411

(54) **METHOD OF BACKPRESSURE TESTING MANUFACTURED PARTS**

VERFAHREN ZUR GEGENDRUCKPRÜFUNG VON HERGESTELLTEN TEILEN

PROCÉDÉ DE TEST DE CONTRE-PRESSION DE PIÈCES FABRIQUÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.07.2023   US 202363514813 P**

(43) Date of publication of application:
**22.01.2025   Bulletin 2025/04**

(73) Proprietor: **Johnson Matthey Public Limited
Company
London EC2V 7AD (GB)**

(72) Inventors:
• **REES, Ian
  Royston, SG8 5HE (GB)**
• **WATRIDGE, Darryl
  deceased (GB)**
• **NISBET, Jordan
  Royston, SG8 5HE (GB)**

(74) Representative: **Boult Wade Tennant LLP
Salisbury Square House
8 Salisbury Square
London EC4Y 8AP (GB)**

(56) References cited:
CN-A- 107 782 639      CN-A- 111 350 822
US-B2- 11 226 277

## Description

### Field of the disclosure

The disclosure relates to the field of backpressure testing of manufactured parts, for example flow through monoliths and filters.

### Background

Exhaust fumes are a waste product produced from combustion of a fuel, for example the combustion of petrol in an internal combustion engine. Exhaust fumes may comprise a mixture of components such as air, carbon dioxide, carbon monoxide, nitrous oxide, sulfur dioxide, hydrocarbons, benzene and/or particulates. The components of the exhaust fumes may vary depending on the fuel being combusted. Exhaust fumes can be harmful to a user and/or damaging to the environment.

An exhaust system may be used to pipe exhaust fumes away from one location to another. For example, a vehicle exhaust system may pipe exhaust fumes from an internal combustion engine to the outside of a vehicle. This may avoid inhalation of the exhaust fumes by the user.

In many cases, it is desirable to remove a component from the exhaust fumes. For this reason, flow through monoliths and filters may be used within the exhaust system to remove components from the exhaust fumes. The removal of components from the exhaust fumes may involve forcing the exhaust fumes through small holes of a filter, which may physically block some components (e.g. particulate components) and/or chemically convert some components using the flow through monolith or filter by catalysing reactions of components (e.g. reduction of nitrous oxides, oxidation of carbon monoxide, oxidation of hydrocarbons and/or the like). By removing some components and/or altering the chemical composition of some components, the exhaust fume may be made less harmful and/or less environmentally damaging.

When a flow of exhaust fumes are passed through a porous substrate, especially a filter, a change in pressure may result. The pressure change may be referred to as a backpressure. A backpressure which is excessively high for a particular mass flow rate may impair the functionality of the exhaust system and/or damage the exhaust system. As such, a filter manufacturer will often seek to certify that a backpressure of a manufactured part, for example a filter falls within a particular range for a mass flow rate representative of the mass flow rate in the exhaust system.

A manufacturer may test the backpressure of a filter and/or other manufactured part using a backpressure testing apparatus such as a SuperFlow flowbench. However, SuperFlow flowbenches (e.g. the SF1020 model available from SuperFlow Dynamometers & Flowbenches), are designed for infrequent measurement of modified car parts such as cylinder heads and ports. Factors such as the cost, the long cycle time (approximately 20-25s), and the size of the SuperFlow flowbench may hinder its suitability for in-line testing of filters and/or other manufactured parts. For these reasons, a manufacturer would not generally test 100% of the final product for conformity with backpressure standards, leaving open the possibility that defective filters and/or other manufactured parts may pass unnoticed.

US11226277B2 discloses a particulate filter inspection system for a particulate filter includes a compressed air source. A primary conduit, a controller, a probe, and a gauge. The compressed air source is configured to draw air from an air source. The primary conduit is configured to receive the air from the compressed air source. The probe is coupled to the primary conduit and communicable with the controller. The probe is configured to interface with a face of the particulate filter to provide the air to only a sector of the particulate filter. The gauge is configured to determine a pressure of a first portion of the air within the primary conduit when the probe is providing a second portion of the air to only a sector of the face of the particulate filter. The controller is configured to receive the pressure from the gauge and compare the pressure to a target upper pressure.

Against this background, it is desirable to provide improved methods of backpressure testing of filters and/or other manufactured parts.

### Summary of the disclosure

In some aspects of this disclosure, there is provided a method of backpressure testing manufactured parts, the method comprising:

a) obtaining one or more reference parts and determining a reference backpressure measurement for each reference part indicative of the backpressure of that reference part when or if tested on a reference testing unit;
b) calibrating one or more testing positions of a backpressure testing unit using the one or more reference parts;
c) setting an upper backpressure limit and a lower backpressure limit for each of the one or more testing positions; and
d) thereafter using the one or more testing positions to assess the backpressure of one or more manufactured parts;

wherein, calibrating the one or more testing positions of the backpressure testing unit in step b) comprises:

b) i) installing one of the reference parts in a or each testing position of the backpressure testing unit;
b) ii) creating a flow through the or each testing position;

b) iii) establishing a calibrated flow for the or each testing position by adjusting the flow through the or each testing position until a backpressure measurement of the reference part in the or each testing position corresponds to the reference backpressure measurement of the respective reference part;

b) iv) thereafter using the calibrated flow for the or each testing position during step d);

wherein, using the one or more testing positions to assess the backpressure of one or more manufactured parts in step d) comprises:

d) i) installing a manufactured part in a or each testing position of the backpressure testing unit;

d) ii) flowing the calibrated flow determined from step b) iii) through the or each testing position;

d) iii) measuring a backpressure measurement of the or each manufactured part;

d) iv) comparing the backpressure measurement of the or each manufactured part against the upper backpressure limit and the lower backpressure limit for the respective testing position and generating and outputting a test result indicative of whether the backpressure measurement is within an acceptable range compared to the upper backpressure limit and the lower backpressure limit.

In this way, it is possible to test the backpressure of manufactured parts with improved efficiency. For example, it may be possible to test the manufactured parts in a lower amount of time and/or to test the manufactured parts in parallel. In this way, it may be made possible to test 100% of a large set of manufactured parts without the testing taking an excessive amount of time.

According to another aspect of this disclosure, there is provided a controller configured to carry out the method.

In this way, the controller may be used to control the testing of the backpressure of manufactured parts with improved efficiency. For example, it may be possible to test the manufactured parts in a lower amount of time and/or to test the manufactured parts in parallel. In this way, it may be made possible to test 100% of a large set of manufactured parts without the testing taking an excessive amount of time.

According to another aspect of this disclosure, there is provided:

a system for backpressure testing of manufactured parts, comprising

the controller configured to carry out the method; and

a backpressure testing unit comprising:

one or more testing positions configured to accommodate a manufactured part and/or a reference part;

a flow generator configured to create a flow through each testing position; and

a backpressure sensor configured to measure backpressure at each testing position.

In this way, the controller may be used to control the testing the backpressure of the manufactured parts on the backpressure testing unit with improved efficiency. For example, it may be possible to test the manufactured parts on the backpressure testing unit in a lower amount of time and/or to test the manufactured parts in parallel, when compared with backpressure testing carried out on alternative testing units, such as a reference testing unit. In this way, it may be made possible to test 100% of a large set of manufactured parts without the testing taking an excessive amount of time, as it may otherwise take if the reference testing unit were used for testing the backpressure of the manufactured parts.

**Brief description of the drawings**

A specific embodiment of the disclosure will now be described, by way of example only, with reference to the accompanying drawings in which:

Figure 1 shows a front view of an orifice plate.

Figure 2 shows a side view of a system for measuring backpressure of an orifice plate

Figure 3 shows a side view of a system for measuring backpressure of a manufactured part.

Figure 4 shows a flow through a portion of a filter.

Figure 5 shows a backpressure testing unit.

Figure 6 shows a reference testing unit.

Figure 7 shows a backpressure testing unit.

Figure 8 shows a plot of backpressure measurements made using the backpressure testing unit plotted against backpressure measurements made using the reference testing unit.

Figure 9 shows a schematic diagram useful for understanding how backpressure measurements made on the backpressure testing unit may be related to backpressure measurements made on the reference testing unit.

Figure 10 shows a system for backpressure testing of manufactured parts.

Figure 11 shows an automated system for backpressure testing of manufactured parts.

Figure 12 shows a method of backpressure testing manufactured parts.

Figure 13 shows a method of obtaining one or more reference parts and determining a reference backpressure measurement for each reference part indicative of the backpressure of that reference part when or if tested on a reference testing unit.

Figure 14 shows a method of calibrating one or more testing positions of a backpressure unit using one or more reference parts.

Figure 15 shows a method of setting an upper backpressure limit and a lower backpressure limit for each of the one or more testing positions.

Figure 16 shows a method of using the one or more testing positions to assess the backpressure of one or more manufactured parts.

Figure 17 shows a method of obtaining one or more verification reference parts having a backpressure measurement when tested on one of the one or more testing positions that is between the upper limit and the lower limit.

Figure 18 shows a photograph of part of a filter.

## Detailed description

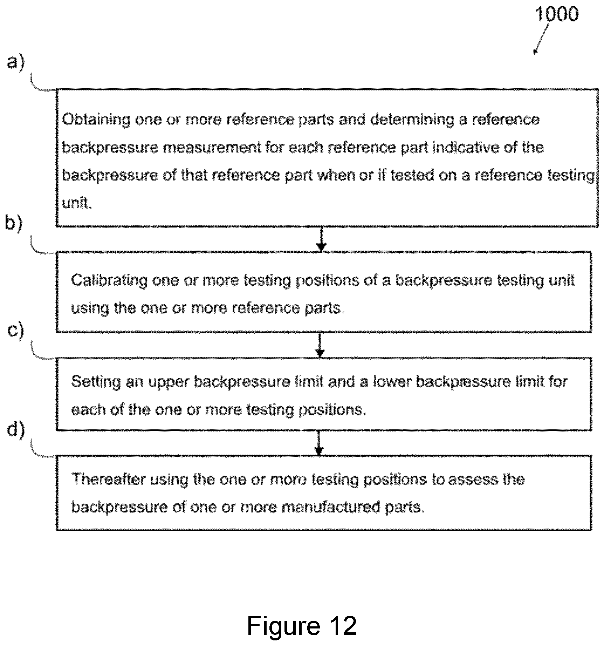

In some aspects of this disclosure, a method 1000 of backpressure testing manufactured parts 250 is provided. Figure 12 shows an embodiment of the method 1000.

In this description, flows comprising a movement of a flow material are described. The flow material may comprise air, particles, gas, exhaust fumes and/or the like. In the flows, the flow material may travel from one location to another, for example through pipes. The direction of travel of flows is illustrated in the figures by arrows, where the head of the arrow indicates a downstream location of the flow and the tail of the arrow indicates an upstream location of the flow.

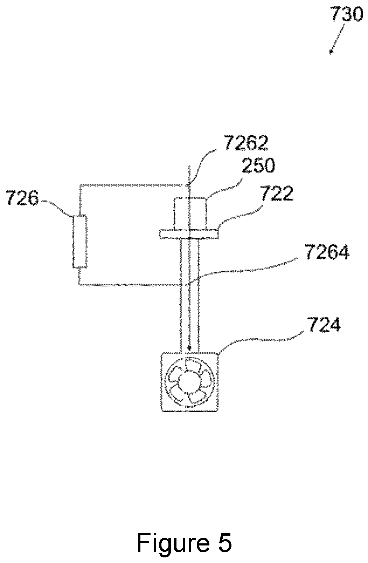

For the purposes of carrying out the method 1000 of backpressure testing, the backpressure testing unit 730 may be provided, as shown in Figure 5. The backpressure testing unit 730 may comprise a testing position 722 configured to accommodate a manufactured part 250, a flow generator 724 configured to create a flow through the testing position 722, a backpressure sensor 726 configured to measure backpressure at the testing position 722, and a controller 710 configured to carry out the method 1000. As the air is caused to flow through the manufactured part, a resistance to the flow is created by the manufactured part and/or a reference part. This in turn creates a pressure differential across the manufactured part and/or the reference part which is measurable by the backpressure sensor.

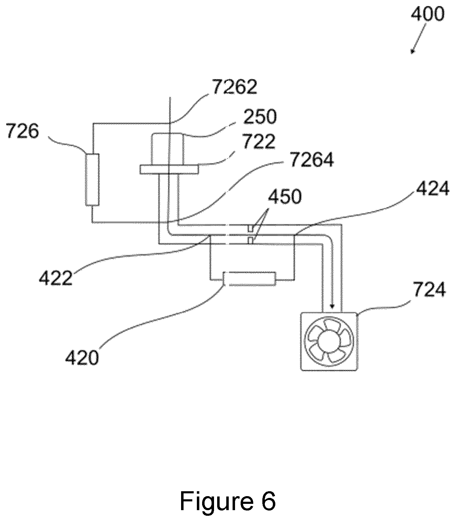

The manufactured part may be any part through which the flow material may pass. The manufactured part may be a filter, an orifice plate, a pipe, and/or the like. In some embodiments, the manufactured part may comprise a manufactured part used in an exhaust system. The reference part may be configured to provide a reference backpressure measurement when or if tested on a reference testing unit 400, such as the reference testing unit 400 shown in Figure 6. In some embodiments, one or more manufactured parts may be provided from a manufacturing station 832 such as a production line of the manufactured parts. The manufactured parts for backpressure testing may have untested backpressures and as such the method 1000 may be used to determine whether or not the backpressure of the manufactured parts are within an acceptable range of backpressures. The reference part may be a filter, an orifice plate, a pipe, and/or the like. In some embodiments, the manufactured part and the reference part may be the same type of part. For example, the manufactured part for backpressure testing may be a filter and the reference part may also be a filter. In some embodiments, the manufactured parts for testing and the reference part may be different types of part. For example, the manufactured parts for testing may be a filter and the reference part may be an orifice plate.

How a backpressure measurement of a manufactured part and/or a reference part can be made will now be explained in more detail below.

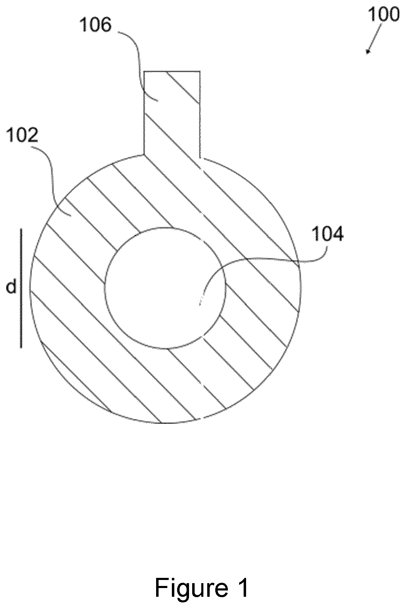

Figure 1 shows an orifice plate 100. The orifice plate 100 may comprise a sheet of material 102 and a bore 104 of diameter d through the sheet of material 102. In some embodiments, the sheet of material 102 may comprise a handle 106 which may be used to position the orifice plate 100 in a flow. In some embodiments, the sheet of material 102 may have a diameter D. When positioned in a flow, air may be forced to pass through the bore 104 to travel from an upstream side of the orifice plate 100 to a downstream side of the orifice plate 100.

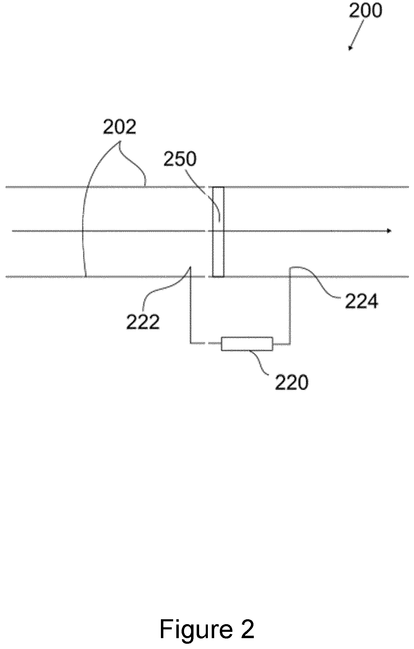

Figure 2 shows a side view of a system 200 for measuring backpressure of the orifice plate 100. Shown in Figure 2, a flow may travel within the walls 202 of a pipe from an upstream location to a downstream location. How the flow is generated is not shown in Figure 2, but will be explained in more detail later in this description. The flows are indicated by arrows, travelling from an upstream location at the tail of the arrow to a downstream location at the head of the arrow. Also shown in Figure 2, the flow may pass through the orifice plate 100, positioned in the path of the flow. In this way, the flows may be forced to pass through the bore 104 of the orifice plate 100. As can be seen, this causes a constriction of the flow as the flow passes through the bore 104. This constriction in the flow produces a change in a pressure of the flow. Thus, at a first location upstream of the orifice plate 100, the pressure may be different compared with a second location downstream of the orifice plate 100.

Thus, the pressure at the first location upstream of the orifice plate $p_1$ may differ compared with the pressure at the second location downstream of the orifice plate $p_2$. In some embodiments, there may be a pressure loss between the pressure at a first location upstream of the orifice plate $p_1$ and the pressure at a second location downstream of the orifice plate $p_2$. The pressure change $p_1$-$p_2$ may be defined as the backpressure P of the orifice plate 100. It is noted that in this disclosure backpressures are denoted by an upper case P. Other pressure measurements, such as those taken at the first and second location as noted above, are denoted using a lower case p. Thus, the backpressure P may be provided by the equation:

$$P=p_1-p_2 \qquad (1)$$

The backpressure of the orifice plate 100 may be determined by a backpressure sensor 220 comprising a downstream pressure sensor 224 configured to measure the pressure at the second location downstream of the orifice plate $p_2$. In some embodiments, the pressure at the first location upstream of the plate $p_1$ may be determined and/or assumed to be atmospheric pressure. The backpressure sensor 220 may output the difference between the atmospheric pressure and the pressure detected by the downstream pressure sensor 224. In some embodiments, backpressure sensor 220 may comprise an upstream pressure sensor 222 configured to measure the pressure at the first location upstream of the orifice plate $p_1$ and a downstream pressure sensor 224 configured to measure the pressure at the second location downstream of the orifice plate $p_2$. The backpressure sensor 220 may output the difference between the pressure detected by the upstream pressure sensor 222 and the downstream pressure sensor 224.

The geometric properties of the orifice plate 100 may influence the backpressure of the orifice plate 100. For example, the backpressure of the orifice plate 100 may change as the diameter of the bore 104 is changed relative to the overall size of the orifice plate 100. The geometric properties of the orifice plate 100 may include the flatness of the orifice plate, the diameter of the bore, the diameter of the orifice plate, the relative diameter (the ratio of the diameter of the bore and the diameter of the orifice plate), the shape of the bore, the thickness of the orifice plate and/or other parameters. For the orifice plate 100 shown in Figure 1, the diameter of the bore is labelled d. The diameter of the pipe is labelled D. The relative diameter $\beta$ may be provided by:

$$\beta=d/D \qquad (2)$$

The relative diameter $\beta$ may vary between 0 and 1. A relative diameter $\beta$ of 1 may correspond with an open pipe 202 and a relative diameter $\beta$ of 0 may correspond with a blocked pipe 202. Thus, as the relative diameter $\beta$ decreases, the backpressure increases.

In some embodiments, the orifice plate 100 may be produced according to a particular set of standards, for example the set of standards defined by "ISO 5167-2 Measurement of fluid flow by means of pressure differential devices inserted in circular cross-section conduits running full - part 2: orifice plates". By manufacturing orifice plates according to a set of standards, it is possible predict how a change in a geometric parameter will affect the backpressure of an orifice plate. In some embodiments, a machining accuracy of a cutting tool for preparing the bore 104 may affect how precisely the orifice plate may be prepared which in turn may affect the backpressure of the orifice plate 100. As such, as high a machining accuracy as possible may be desirable for preparing the orifice plate 100. In some embodiments, machining accuracy of below $100\mu m$ may be used. In some embodiments, machining accuracy of below $10\mu m$ may be used. In some embodiments, machining accuracy of below $1\mu m$ may be used.

In some embodiments, the shape of bore 104 may be a shape other than circular, for example an ellipse and/or other non-circular shape. In some embodiments, the bore may be a section of a circular shape, for example an annulus. In some embodiments, the diameter of the bore on the upstream side of the orifice plate 100 may be different to the diameter of the bore on the downstream side of the orifice plate 100, for example the bore 104 may define a section of a cone. In some embodiments, there may be one or more bores 104.

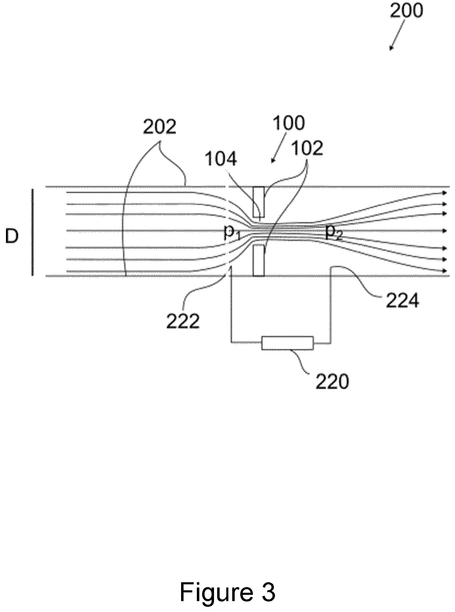

The system 200 shown in Figure 2 may be used to measure the backpressure of other manufactured parts, for example filters, placed in the path of the flow. Figure 3 shows a side view of a manufactured part, positioned in a flow. In Figure 3, instead of the orifice plate 100, a manufactured part 250 is placed in the path of the flow. In much the same way as described above, the backpressure across the manufactured part may then be measured by backpressure sensor 220. In some embodiments, the manufactured part 250 may be a filter. In Figure 3, the flow is indicated by a single arrow to show the general direction of the flow. In general, the flow pattern may be complex and would depend on the manufactured part being used. As such, in Figure 3, the flow is indicated by a single arrow to show the overall direction of the flow.

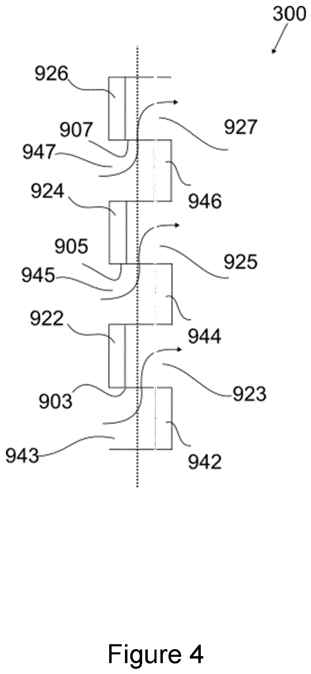

As explained above, the manufactured part 250 may be a filter 300. Figure 4 shows a flow through a portion of the filter 300. Figure 3 shows a flow through a filter 300. The flow in figure 4, indicated by arrows, passes from upstream locations 943, 945, 947, through porous walls 903, 905, and 907, to downstream locations 923, 925, and 927. By forcing the flow to pass through porous walls 903, 905, and 907, the direction and speed of the flow is changed, which correspondingly changes the pressure of the air at the downstream location compared with the upstream location. As such, there may be a pressure difference between the upstream location and the downstream location. The pressure difference may be defined as the backpressure of the filter 300. As described previously, a backpressure measurement of the filter 300 may be made as shown in Figure 2, by using a backpressure sensor 220 to calculate a difference between pressure measurement by an upstream pressure sensor 222 and a pressure measurement by a downstream pressure sensor 224.

The porous walls 903, 905, 907 of filter 300 may comprise pores through which the flow can pass. The pores of a filter 300 may be numerous and small. The pores of filter 300 may be present in the porous walls 903, 905, and/or 907. In some embodiments, the pores of a filter 300 may be smaller than $100\mu m$ in diameter. In some embodiments, the pores of a filter 300 may be smaller than 10nm in diameter, and/or smaller than 1nm in diameter. In some embodiments, the pores of filter 300 may be smaller than a particle component of the flow such that the particle component is unable to pass through the pores. In some embodiments, the pores may define a large surface area for catalysing reactions with components of the flow. Additionally, the pores of a filter 300 may be varied in shape and/or arranged in an unpredictable or heterogenous pattern. In general, it would be difficult to predict theoretically how the backpressure of the filter 300 may vary as a mass flow rate is adjusted. Nevertheless, because a particular filter 300 will provide a consistent backpressure, it is possible to manufacture an orifice plate 100 which has equivalent backpressure to the particular filter 300. For example, the diameter ratio $\beta$ of an orifice plate 100 could be adjusted until the backpressure of the orifice plate 100 is the same as the backpressure of the filter 300.

In the above descriptions of measuring backpressure of the manufactured part 250 (e.g. the orifice plate 100 and/or the filter 300), how the flow is generated and controlled has not been described. How the flow is generated and controlled will now be described.

The backpressure of a manufactured part 250 may be measured at a controlled mass flow rate $Q_m$ using a backpressure testing unit 730. Figure 5 shows a backpressure testing unit 730. The backpressure testing unit 730 comprises a testing position 722 configured to accommodate a manufactured part 250; a flow generator 724 configured to create a flow through each testing position 722; and a backpressure sensor 726 configured to measure backpressure at the testing position 722. In some embodiments, the backpressure sensor 726 may comprise a downstream pressure sensor 7264. The upstream pressure may be determined to be and/or assumed to be atmospheric pressure. In some embodiments the backpressure sensor 726 may comprise an upstream pressure sensor 7262 and a downstream pressure sensor 7264.

In some embodiments, the flow generator 724 may comprise a fan configured to rotate to cause the flow material to flow. The rotation speed of the flow generator $\omega$ may be adjusted to control the flow. For example, if the rotation speed of the flow generator $\omega$ is increased, the mass flow rate $Q_m$ may increase and if the rotation speed of the flow generator $\omega$ is decreased, the mass flow rate $Q_m$ may decrease. In this way, the flow generator 724 may be used to generate and control a flow through the manufactured part 250. The backpressure of the manufactured part 250 may then be measured using backpressure sensor 726 by calculating a difference between the pressure at upstream pressure sensor 7262 and the pressure at downstream pressure sensor 7264.

Thus, the backpressure of the manufactured part 250 may be measured at a range of rotation speeds of the flow generator $\omega$, which in turn define a range of mass flow rates $Q_m$ using backpressure testing unit 730. However, while the rotation speeds of the flow generator $\omega$ may be known and/or determined, for example by using a calibrated flow generator (e.g. using a tachometer to calibrate/determine the rotation speed of the flow generator $\omega$), the mass flow rate $Q_m$ may not be determinable by the backpressure testing unit 730.

As has been explained previously, a manufacturer may wish to indicate the backpressure of the manufactured part 250 for particular flow conditions. For example, the manufacturer may wish to measure the backpressure of the manufactured part 250 for a particular mass flow rate v. The manufacturer may wish to measure the backpressure of the manufactured part at an industry standard mass flow rate, for example a mass flow rate equivalent to a volumetric flow rate of $600m^3/hr$ and/or a mass flow rate derived from a measurement of a typical mass flow rate in an exhaust system. The mass flow rate and the volumetric flow rate can be converted to one another based on the density of the flow material.

Figure 6 shows a reference testing unit 400. The reference testing unit 400 is similar to the backpressure testing unit 730, but the reference testing unit 400 further comprises a variable orifice plate 450, and a variable orifice plate backpressure sensor 420. The variable orifice plate backpressure sensor 420 may comprise an upstream backpressure sensor 424 configured to measure the pressure upstream of the variable orifice plate and a downstream backpressure sensor 422 configured to measure the pressure downstream of the variable orifice plate.

The variable orifice plate 450 may comprise an adjustable orifice plate and/or one or more switchable orifice plates. The reference testing unit 400 may be a flowbench, such as a Super Flow SF 1020 and/or the like. The variable orifice plate 450 and variable orifice plate backpressure sensor 420 allow the flow (generated by flow generator 724) to be adjusted by adjusting the geometric properties of the variable orifice plate 450. For example, the relative diameter $\beta$ of the variable orifice plate 450 may be increased or decreased, to increase or decrease the flow. In some embodiments, the relative diameter $\beta$ may be increased or decreased by adjusting the adjustable orifice plate. In some embodiments, the relative diameter $\beta$ may be increased or decreased by exchanging a first switchable orifice plate for a second switchable orifice plate with an increased or decreased relative diameter β.

By providing backpressure sensor 420, the mass flow rate may be determined. For example, the dependence of the mass flow rate on the relative diameter β of the variable orifice plate and the backpressure determined by backpressure sensor 420 may be known and/or calibrated. As such, it is possible to determine the mass flow rate based on the measurement provided by the backpressure sensor 420.

Thus, by using a reference testing unit 400, it is possible to measure a backpressure of the manufactured part 250 and/or the reference part, and a mass flow rate $Q_m$ at the same time. In this way, it is possible to measure the backpressure of the manufactured part 250 and/or the reference part at a particular mass flow rate.

In some embodiments, the reference testing unit 400 may be used to test the backpressure of a reference part, for example a reference orifice plate, at a particular mass flow rate. As will be explained in more detail below, one or more manufactured parts 250 may be tested on the backpressure testing unit 730 by making comparisons with tests of the reference part on the backpressure testing unit 730. In this way, a need to test the manufactured part 250 on the reference testing unit 400 may be avoided.

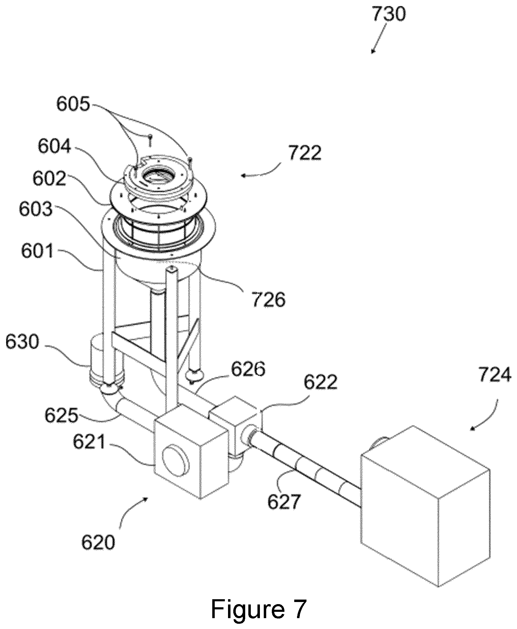

Figure 7 shows an exemplary three dimensional representation of the backpressure testing unit 730. As can be seen in Figure 7, the backpressure testing unit 730 comprises testing position 722. In the embodiment shown in Figure 7, the backpressure testing position 722 may comprise vacuum cone 603, filter assembly 602, and vacuum tooling 604 secured to filter assembly 602 by location bolts 605. The vacuum tooling 604 may comprise a central opening configured to hold the manufactured part 250 (the manufactured part 250 is not shown in Figure 7). Alternatively, the vacuum tooling 604 may be configured to hold the reference part, for example a reference orifice plate. In some embodiments, a first vacuum tooling for the manufactured part 250 and a second vacuum tooling for the reference part may be provided, the vacuum tooling acting as an adaptor to connect the manufactured part 250 and/or the reference part to the backpressure testing unit 730.

The flow generator 724, which may comprise a fan, may then be used to cause a flow through the manufactured part 250. The backpressure sensor 726 (indicated as within the vacuum cone 603 by the dotted line) may then be used to measure the backpressure of the manufactured part 250. The backpressure testing unit 730 may further comprise a frame assembly 601 welded at points shown by label 603 to a vacuum cone assembly.

The backpressure testing unit 730 may further comprise a flow switching assembly 620 comprising a valve 622 and a valve actuator 621. With the manufactured part 250 under measurement, the valve 622 may be in a first position such that the flow generator 724 causes a flow through the manufactured part 250, measurement pipe 626, through valve 622, and through end pipe 627. Because such a flow creates a suction on the manufactured part 250 by the vacuum created, it may then be difficult for the manufactured part 250 to be removed without stopping the flow through the manufactured part 250. The valve 622 may be caused to move to a second position by the valve actuator 621 such that the airflow generator 724 causes a flow from an entrance 630 (which may be a filtered entrance to prevent dust from entering the system), through re-directed flow pipe 625, and through valve 622, and through end pipe 627. In this way, the suction on the manufactured part 250 may be released, for example air may enter the vacuum cone 603 though filter assembly 602 to reduce or eliminate the pressure difference between the inside of the vacuum cone 603 and the external pressure (which may be atmospheric pressure). This allows the manufactured part 250 to be removed without any need to switch off the airflow generator 724. Because the valve 622 may be switchable more rapidly than switching off and restarting the flow generator 724, the time taken between measurements of manufactured parts 250 may be reduced, resulting in a greater throughput of testing of the manufactured parts 250.

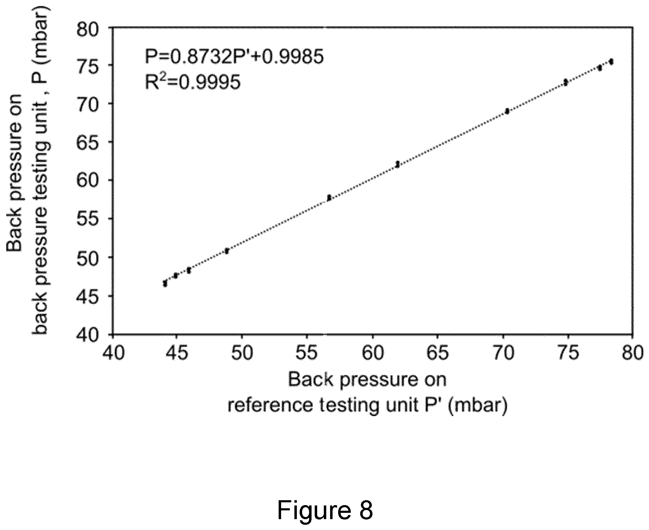

Figure 8 shows a plot of backpressure measurements made using the backpressure testing unit 730 (on the y-axis) plotted against for comparison backpressure measurements made using the reference testing unit 400, such as a Superflow SF 1020 (on the x-axis). The backpressure measurements on the backpressure testing unit 730 may be denoted P. The backpressure measurements made on the reference testing unit 400 may be denoted P'.

From here onwards in this description, the following convention in denoting pressure measurements may apply. Backpressures indicative of measurements taken by a reference testing unit 400, for example as shown in Figure 6 are indicated by a prime ('). Backpressures indicative of measurements taken by a backpressure testing unit 730, for example as shown in Figure 5, are indicated without a prime ('). A subscript is used to denote which manufactured part is being measured. For example, a backpressure measurement of manufactured part A on the reference testing unit 400 is be referred to as $P_A'$. A backpressure measurement of manufactured part A on the backpressure testing unit 730 is be referred to as $P_A$.

As can be seen on Figure 8, ten manufactured parts 250 have been tested in total. The ten manufactured parts may be ten reference parts. There are two circles plotted for each manufactured part 250 to indicate the backpressure measurement uncertainty in the measurement taken on the backpressure testing unit 730, where the higher circle indicates an upper error boundary and the lower circle indicates a lower error boundary. The x-axis uncertainty due to the uncertainty in the measurement taken on the reference testing unit 400 may be too small to be visible on the plot.

As can be understood from the coefficient of determination, labelled $R^2$, of 0.9995 there is a strong correlation between the backpressure measurements made using the backpressure testing unit 730 and the comparison backpressure measurements made using the reference testing unit. As can be seen by the equation of the line of best fit (P=0.8732P'+0.9985), the values measured according to the backpressure testing unit 730 and the Superflow may be numerically different, for example they may differ due to the gradient being unequal to 1 and due to an offset. In the above example, the gradient is 0.8732 and the offset is 0.9985.

In some embodiments, the ten parts shown plotted in Figure 8 may be one or more reference parts. The ten parts have a consistent measurement on the backpressure testing unit 730 (the y data) and a consistent measurement on the reference testing unit 400 (the x data). As such, it is possible to compare a backpressure measurement of a manufactured part on the backpressure testing unit 730 to a backpressure measurement of a reference part on the backpressure testing unit 730. In this way, it is possible to understand how another manufactured part 250 would behave on the reference testing unit 400, without testing that manufactured part 250 on the reference testing unit 400. This is because a comparison point may be provided by the reference part.

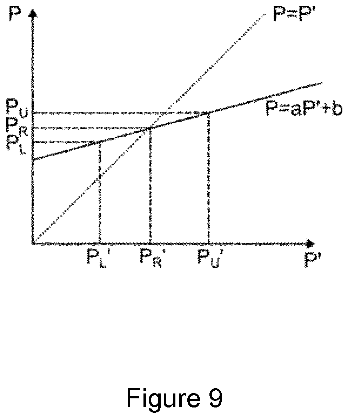

Figure 9 shows a schematic diagram useful for understanding how backpressure measurements made on the backpressure testing unit 730 may be related to backpressure measurements made on the reference testing unit 400, without the need for testing the manufactured part on the reference testing unit 400 directly. As can be seen in Figure 9, a lower limit reference part denoted L, a reference part denoted R, and an upper limit reference part denoted U have been tested on the backpressure testing unit 730 (denoted without ') and on the reference testing unit 400 (denoted with '). The solid line plots backpressure values on the backpressure testing unit P against backpressure values on the reference testing unit P'). In Figure 9, the solid line is a straight line parameterised by values a and b. If the relationship between P and P' were the same as the relationship shown in Figure 8, a might be equal to 0.8732 and b might be equal to 0.9985. However, as will be explained further below, the function of the solid line may not need to be known for the purpose of carrying out the methods described herein, for example both a and b may be unknown. In general, P may depend on some function of P'. The dashed lines indicate how the backpressure on the backpressure testing unit, $P_L$, $P_R$, $P_U$ map to backpressure measurement on the reference testing unit $P_L$', $P_R$', $P_U$'. The dotted line indicates the set of points on the plot for which P is equal to P'. As can be seen in Figure 9, for the reference part R, the backpressure obtained using the backpressure testing unit $P_R$ is equal to the backpressure obtained using the reference testing unit $P_R$'. This may be seen by the intersection of the solid line with the dotted line. In the example shown in Figure 9, there is only a single coordinate ($P_R$, $P_R$') for which the backpressure on the backpressure testing unit 730 and the reference testing unit 400 are the same. For the upper limit reference part and the lower limit reference part, $P_U$' is numerically different to $P_U$, and $P_L$' is numerically different to $P_L$.

In some embodiments, P may depend on an increasing function of P', that is any increase in P corresponds with an increase in P' and any decrease in P corresponds with a decrease in P'. In some embodiments, P may depend on a non-linear increasing function of P'. Therefore, a backpressure measurement of the manufactured part $P_M$ for backpressure testing on the backpressure testing unit 730 between $P_L$ and $P_U$ may be determined to also fall within $P_L$' and $P_U$', without the need to determine the backpressure manufactured part on the reference testing unit $P_M$'. In this way, it may be determined that if

$$P_L < P_M < P_U \qquad (3)$$

is true, then it follows that

$$P_L' < P_M' < P_U' \qquad (4)$$

is also true. Thus, the need to determine $P_M$' directly may be avoided. In this way, the need to test each manufactured part 250 on the reference testing unit 400 is avoided, but a reliable determination of whether the backpressure of the manufactured part $P_M$' would be within the upper and lower limits on the reference testing unit 400 may be obtained nevertheless.

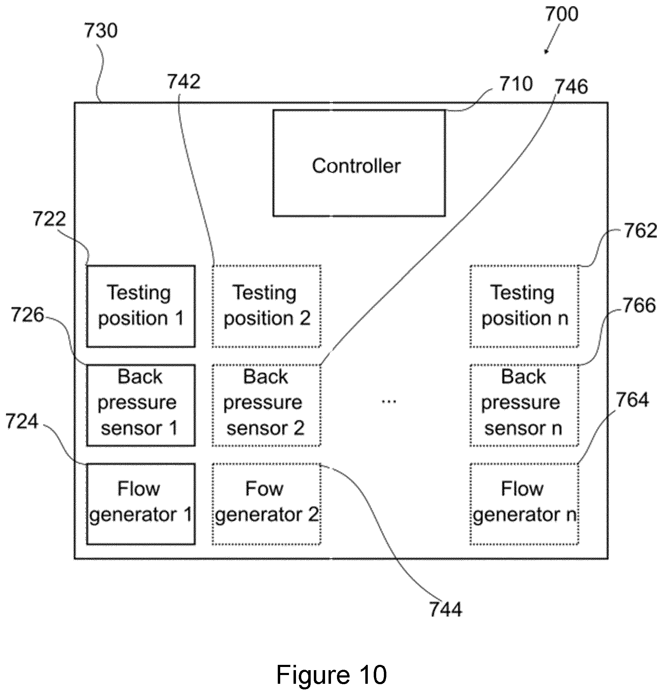

Figure 10 shows a system 700 for backpressure testing of manufactured parts comprising one or more testing positions 722, 742, 762. The system 700 for backpressure testing of manufactured parts 250 comprises the backpressure testing unit 730, for example the backpressure testing unit 730 shown in Figure 5 and/or Figure 7. Similar to the backpressure testing unit 730 shown in Figure 5 and/or Figure 7, the backpressure testing unit 730 shown as part of the system 700 in Figure 10 comprises the testing position 722, the backpressure sensor 726 and the flow generator 724. As shown in Figure 10, the backpressure testing unit 730 may further comprise a controller 710 for carrying out a method 1000 of backpressure testing. The method 1000 will be described in more detail below. As can be seen in Figure 10, the backpressure testing unit 730 may further comprise one or more additional testing positions.

An advantage of some embodiments of this disclosure is the ability to test one or more manufactured parts 250 in parallel/contemporaneously. As such, in some embodiments, the backpressure testing unit 730 may comprise one or more testing positions 722, 742, 762 configured to accommodate a manufactured part 250 and/or a reference part; one or more flow generators 724, 744, 764 configured to create a flow through each testing position 722, 742, 762; and one or more backpressure sensors 726, 746, 766 configured to measure the backpressure at each testing position 722, 742, 762. In some embodiments, for each of the one or more testing positions 722, 742, 762, a respective flow generator 724, 744, 764 is provided such that the 1st flow generator 724, the 2nd flow generator 744, up to the nth flow generator 764 may be configured to create a flow through the 1st testing position 722, the second testing position 742, up to the nth testing position respectively. In some embodiments, for each of the one or more testing positions 722, 742, 762, a respective backpressure sensor 726, 746, 766 is provided, such that the 1st backpressure sensor 726, the 2nd backpressure sensor 746, up to the nth backpressure sensor 766 may be configured to measure the backpressure at the 1st testing position 722, the second testing position 742, up to the nth testing position respectively. As such, each of the testing position 722, 742, 762 may represent a position where a manufactured part 250 may be tested. In this way, n manufactured parts 250 may be tested in parallel. It is noted that by providing the respective flow generator 726, 746, 766 for each testing position 722, 742, 762, the flow of each testing position 722, 742, 762 may be independently calibrated.

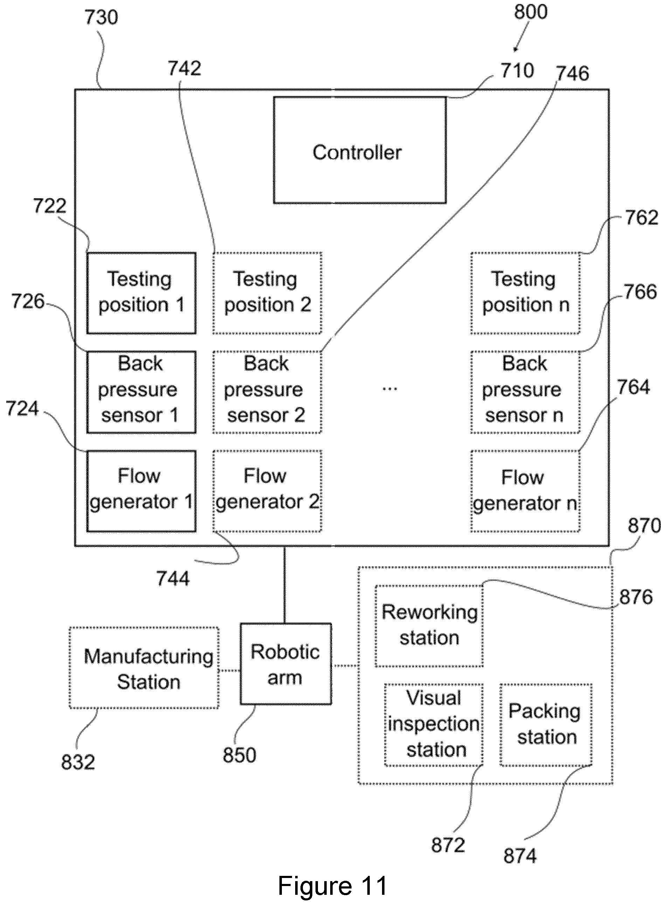

In some embodiments, an automated system 800 for backpressure testing of manufactured parts 250 may be provided. For example, robotic arm 850 may be provided to carry out the testing of the manufactured parts 250. Figure 11 shows the automated system 800 for backpressure testing of manufactured parts 250. The automated system 800 is similar to the system 700, but the automated system 800 further comprises a robotic arm 850 for automatic placing of one or more manufactured parts 250 at the one or more testing positions 722, 742, 762. The robotic arm 850 may place the manufactured parts 250 for backpressure testing and/or reference parts at the one or more testing positions 722, 742, 762.

As can be seen in Figure 11, the backpressure testing unit 730 may be provided as part of a production line comprising a manufacturing station 832. In this way, testing of the manufactured parts 250 output from the manufacturing station 832 may be carried out. The manufacturing station 832 may be an apparatus configured to produce the manufactured parts 250. Conveying means, such as a conveyor belt may carry the manufactured parts 250 from the manufacturing station 832 to the backpressure testing unit 730. The robotic arm 850 may then pick up one of the manufactured parts 250 and place the manufactured part 250 on one of the one or more testing positions 722, 742, 762 and then use the respective backpressure sensor 726, 746, 766 to measure a backpressure of the manufactured part when the flow is created through the manufactured part 250 by the the respective flow generator 724, 744, 764. Similarly, the robotic arm 850 may pick up the reference part and place the reference part on one of the one or more testing positions 722, 742, 762 and then use the respective backpressure sensor 726, 746, 766 to measure a backpressure of the reference part when the flow is created through the manufactured part 250 by the respective flow generator 724, 744, 764.

Once the backpressure of the reference part has been measured, the reference part may be provided to the store accessible by the robotic arm 850 for additional calibrations or verifications. Alternatively, the reference part may be provided to one or more of the other testing positions 722, 742, 762. Once the backpressure of the manufactured part 250 has been measured, the manufactured part may be provided to one or more additional stations 870, for example a reworking station 876, a visual inspection station 872, and/or a packing station 874. The manufactured part may be provided to the one or more additional stations by the conveying means, for example by the robotic arm 850 removing the manufactured part from one of the testing positions 722, 742, 762 and placing the manufactured part on the conveying means, such as a conveyor belt. Where the manufactured part is sent may depend on a test result based on the backpressure measurement made by the respective backpressure sensor 726, 746, 766. According to some of the methods disclosed herein, a test result may be determined based on the backpressure measurement. How the test results may be determined will be explained in more detail below with reference to the method steps. For example, if the test result is a negative test result, the manufactured part may be directed to the reworking station 876. Alternatively, if the test result is a positive test result, the manufactured part may be directed to the visual inspection station 872 and/or the packing station 874.

In some embodiments, each of the manufactured parts 250 comprises a unique identifier, such as a barcode. As such, the unique identifier of the manufactured part 250 may be identified (for example by scanning the barcode) as the manufactured part is positioned or removed from one of the one or more testing positions 722, 742, 762. In this way, the backpressure measurement made by the respective backpressure sensor 726, 746, 766 may be associated with the unique identifier. The unique identifier accordingly may allow the test result to be associated with each of the manufactured parts 250.

The backpressure testing unit may further comprise a controller 710 configured to carry out a method 1000 of backpressure testing. The controller may comprise a memory for storing instructions and/or data, a processor, and/or signal outputs/inputs for transmitting instructions to/receiving instructions from the other components of the system for backpressure testing 700, 800. The controller 710 may be configured to transmit instructions to the robotic arm 850.

The method 1000 for carrying out backpressure testing of manufactured parts 250 will now be described.

In some aspects of this disclosure, a method 1000 of backpressure testing manufactured parts 250 is provided. The method may comprise comparing a backpressure measurement of a manufactured part 250 on the backpressure testing unit 730 to a backpressure measurement of the reference part on the backpressure testing unit 730, and checking that the backpressure measurement of the manufactured part 250 falls within an upper limit and a lower limit defined with respect to the backpressure measurement of the reference part. In this way, the backpressure of the manufactured part 250 may be checked against the reference part. The reference part may itself have been checked on a reference testing unit 400. As will be explained in more detail below, by testing the backpressure of the manufactured part 250 in this way, it may be possible to reduce an amount of time to taken to test each manufactured part 250 and/or test one or more manufactured parts 250 in parallel. Additionally, it may be possible to avoid a need to test the manufactured part 250 on the reference testing unit 400.

In some embodiments, the reference part may be an orifice plate 100 configured to have a backpressure which matches a reference backpressure when or if tested on the reference testing unit 400. The reference backpressure may comprise a backpressure which would be suitable for the manufactured part 250 to have when used, for example when used as part of an exhaust system.

Figure 12 shows an overview of the method 1000 of backpressure testing manufactured parts. As shown in Figure 12, the method 1000 comprises:

a) obtaining one or more reference parts and determining a reference backpressure measurement for each reference part indicative of the backpressure of that reference part when or if tested on a reference testing unit 400;
b) calibrating one or more testing positions 722, 742, 762 of the backpressure testing unit 730 using the one or more reference parts;
c) setting an upper backpressure limit and a lower backpressure limit for each of the one or more testing positions 722, 742, 762; and
d) thereafter using the one or more testing positions 722, 742, 762 to assess the backpressure of one or more manufactured parts 250;

In this way, it is possible to assess the backpressure of one or more manufactured parts 250 in step d) by comparing the backpressure of the one or more manufactured parts 250 to the limits set in step c). The limits set in step c) may themselves be based on measurements derived from a measurement in step b) of the reference part. Alternatively, the limits set in step c) may be based on a backpressure measurement of an upper limit reference part and/or a lower limit reference part. Each of these steps will now be discussed in more detail.

As explained above, the method 1000 of backpressure testing manufactured parts comprises:

a) obtaining one or more reference parts and determining a reference backpressure measurement for each reference part indicative of the backpressure of that reference part when or if tested on the reference testing unit 400;

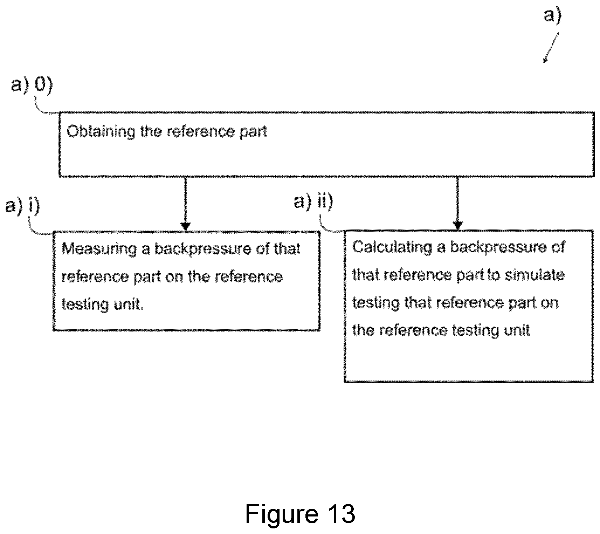

As has already been explained an advantage of the method 1000 may be that it is possible to test one or more manufactured parts on the backpressure testing unit 730, without needing to test the one or more manufactured parts 250 on the reference testing unit 400. Nevertheless, by providing one or more reference parts, it is possible to understand how the one or more manufactured parts 250 might behave on the reference testing unit 400 without testing the one or more manufactured parts 250 on the reference testing unit 400 directly. As outlined above in the statement about step a), it may be important to determine the backpressure of the reference part when or if tested on the reference testing unit ($P_R$'). As will be explained further below, the backpressure of the reference part when or if tested on the reference testing unit ($P_R$') may be determined by experimentation (e.g. measuring on the reference testing unit 400, as in step a) i)), and/or theoretical calculation (e.g. as in step a) ii) where steps a) i) and a) ii) are shown in Figure 13 and set out in detail below). How the backpressure of the reference part when or if tested on the reference testing unit ($P_R$') may be determined will now be explained in more detail with reference to Figure 13.

Figure 13 shows an embodiment of the step a) of obtaining one or more reference parts and determining the reference backpressure measurement for each reference part indicative of the backpressure of that reference part when or if tested on the reference testing unit ($P_R$'). As shown in Figure 13, in some embodiments, determining the reference backpressure measurement for each reference part indicative of the backpressure of that reference part when or if tested on the reference testing unit ($P_R$') in step a) comprises:

a) i) measuring a backpressure of that reference part on the reference testing unit 400; and/or
a) ii) calculating a backpressure of that reference part to simulate testing that reference part on the reference testing unit 400.

In some embodiments, obtaining the reference part may comprise obtaining an orifice plate configured to provide the reference backpressure measurement when or if tested on the backpressure testing unit ($P_R$'). In some embodiments, obtaining the reference part may comprise obtaining a reference part of the same type as the manufactured part 250 (for example if the manufactured part comprises a filter, the reference part may also comprise a filter) configured to provide the reference backpressure measurement when or if tested on the backpressure testing unit ($P_R$'). In some embodiments, the reference backpressure measurement when or if tested on the backpressure testing unit ($P_R$') may correspond with a target pressure or a tolerated pressure for the manufactured part 250 when or if installed in an end use system, such as an exhaust system.

In some embodiments, the backpressure of the reference part when or if tested on the reference testing unit ($P_R$') may vary with the mass flow rate $Q_m$ as follows:

$$P_R' = g(Q_m) \qquad (5)$$

where g is a function and $Q_m$ is the mass flow rate.

As such, in some embodiments, a target mass flow rate $Q_{m\,Target}$ may be used as the mass flow rate. In some embodiments, the target mass flow rate $Q_{m\,Target}$ may be equivalent to an industry standard test volumetric flow rate such as 600m$^3$/hr. In such embodiments, the backpressure of the reference part when or if tested on the reference testing unit $P_R$' may be provided by:

$$P_R' = g(Q_{m\,Target}) \qquad (6)$$

Following step a) i), the backpressure of the reference part when or if tested on the reference testing unit $P_R$' may be determined by experimentation. In more detail, following step a) i), the backpressure of the reference part when or if tested on the reference testing unit 400 may be determined by measuring the backpressure of the reference part on the backpressure testing unit 400. For example, the backpressure of the reference part may be tested on the backpressure testing unit 400 by positioning the reference part on the one of the testing positions 722, 742, 762. From there, a flow may be generated using the respective flow generator 724, 744, 764. As has already been explained in the above discussion about Figure 6, it is possible to determine the mass flow rate by using the variable orifice plate 450 and the variable orifice plate backpressure sensor 420. For example, by using a variable orifice plate 450 to adjust the mass flow rate, it is possible to ensure the backpressure of the reference part when measured on the reference testing unit 400 is measured at the target value mass flow rate $Q_{m\,Target}$. The target mass flow rate $Q_{m\,Target}$ may be a typical mass flow rate $Q_{m\,Target}$ of an exhaust system or an industry standard test mass flow rate, for example a mass flow rate equivalent to a volumetric flow rate of 600m$^3$/hr. In this way, a measurement of the reference part on the reference testing unit 400 may be made.

Following step a) ii), the backpressure of the reference part when or if tested on the reference testing unit $P_R$' may be determined by theoretical calculation, particularly in embodiments where the reference part has a mathematically derivable effect on pressure of a flow. In some embodiments, the reference part may comprise an orifice plate 100. As has been explained previously, it is possible provide an orifice plate 100 with a particular backpressure by varying the relative diameter β (or another geometrical parameter) of the orifice plate 100. In some embodiments, the reference part may be an orifice plate 100 produced according to a particular set of standards, for example the set of standards defined by "ISO 5167-2 Measurement of fluid flow by means of pressure differential devices inserted in circular cross-section conduits running full - part 2: orifice plates".

In some embodiments, the backpressure of the reference part when or if tested on the reference testing unit $P_R$' may be determined by following step a) i), step a) ii), and/or step a) i) and step a) ii). In this way, an experimental determination, a theoretical determination, and/or an experimental and a theoretical determination of the backpressure of the reference part when or if tested on the reference testing unit $P_R$' may be made.

As explained above, the method 1000 of backpressure testing manufactured parts further comprises: b) calibrating one or more testing positions 722, 742, 762 of a backpressure testing unit 730 using the one or more reference parts;

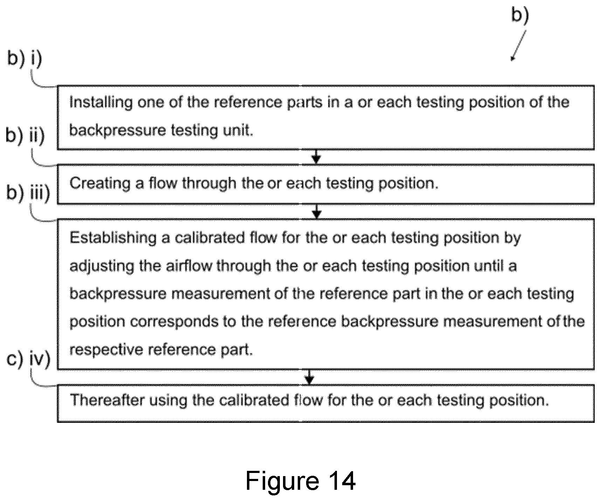

Figure 14 shows an embodiment of the step b) of calibrating one or more testing positions 722 of a backpressure unit 730 using one or more reference parts. Calibrating the one or more testing positions of the backpressure testing unit 730 in step b) comprises:

    b) i) installing one of the reference parts in a or each testing position 722, 742, 762 of the backpressure testing unit 730;
    b) ii) creating a flow through the or each testing position 722, 742, 762;
    b) iii) establishing a calibrated flow for the or each testing position 722, 742, 762 by adjusting the flow through the or each testing position 722, 742, 762 until a backpressure measurement of the reference part in the or each testing position $P_R$ corresponds to the reference backpressure measurement of the respective reference part $P_R$';
    b) iv) thereafter using the calibrated flow for the or each testing position during step d);

In some embodiments, the flow generator 724, 744, 764 of the backpressure testing unit 730 comprises a fan. In such embodiments, by increasing the rotation speed ω and/or rotation frequency of the flow generator 724, 744, 764, the mass flow rate $Q_m$ may be increased. Correspondingly, by decreasing the rotation speed ω and/or rotation frequency of the flow generator 724, the speed of the flow may be decreased. Thus, the calibrated flow may correspond with a particular rotation speed ω and/or rotation frequency of the flow generator 724. In this way, the reference part is used to obtain a calibrated flow.

In the step b) i), the reference part may be installed at one of the one or more testing positions 722, 742, 762. For example, the robotic arm 850 may be used to install the reference part at the one or more testing positions 722, 742, 762. In some embodiments, where the one or more testing positions 722, 742, 762 are calibrated sequentially, the robotic arm may install the reference part at the one or more testing positions 722, 742, 762 sequentially. In some embodiments, where the one or more testing positions 722, 742, 762 are calibrated contemporaneously, the robotic arm 850 may install the reference part at the one or more testing positions 722, 742, 762 contemporaneously. In the embodiment where the one or more testing positions 722, 742, 762 are calibrated contemporaneously, one reference part for each testing position 722, 742, 762 which is contemporaneously calibrated may be provided.

In the step b) ii), the flow may be created through the one or more testing positions 722, 742, 762. For example, for example the rotation speed $\omega$ of the respective flow generator 724, 744, 764 may be increased to create the flow through the one or more testing positions 722, 742, 762. Increasing the rotation speed $\omega$ may increase the mass flow rate and decreasing the rotation speed $\omega$ may decrease the mass flow rate. As the mass flow rate though the reference part is increased or decreased, the backpressure measured by the respective backpressure sensor 726, 746, 766 may increase or decrease. Thus, the backpressure of the reference part when tested on the backpressure testing unit $P_R$ depends on the mass flow rate, which in turn depends on the rotation speed $\omega$. The backpressure of the reference part when tested on the backpressure testing unit $P_R$ may also depend on the backpressure of the reference part when or if tested on the reference testing unit $P_R'$. Expressed as an equation, the backpressure of the reference part when tested on the backpressure testing unit $P_R$ may be provided by:

$$P_R = f(P_R', \omega) \quad (7)$$

where f may be an unknown function.

In the step b) iii), a calibrated flow may be determined. As has been explained above, the reference testing unit 730 may, compared with the backpressure testing unit 730, further comprise the calibrated orifice plate 450 and as such it is possible to determine the mass flow rate $Q_m$ using the reference testing unit 400. In some embodiments, the backpressure testing unit 730 may lack the ability to determine the mass flow rate $Q_m$. As such, while the rotation speed ($\omega$) may be used to increase or decrease the mass flow rate $Q_m$, it may be unknown how the mass flow rate $Q_m$ is being increased or decreased in the backpressure testing unit 730. The calibrated flow may be determined by increasing the rotation speed $\omega$ of the flow generator 724, 744, 764 until a calibrated rotation speed $\omega_{Cal}$ is obtained such that:

$$P_R = f(P_R', \omega_{Cal}) = P_R' \quad (8)$$

In other words, the calibrated rotation speed $\omega_{Cal}$ may comprise a rotation speed such that the backpressure of the reference part when or if tested on the backpressure testing unit $P_R$ is equal to the backpressure of the reference part when or if tested on the reference testing unit $P_R'$. Thus, at the calibrated fan speed:

$$P_R = P_R' \quad (9)$$

For example, the speed of the fan from the respective flow generator 724, 744, 764 may be adjusted to the calibrated rotation speed $\omega_{Cal}$, where it may be determined that the calibrated rotation speed $\omega_{Cal}$ has been reached because the backpressure determined by the respective backpressure sensor 726, 746, 766 has a value equivalent to $P_R'$.

In the step b) iv), the calibrated flow may be used thereafter in step d) for each of the one or more testing positions 722, 742, 762. For example, the calibrated fan speed $\omega_{Cal}$ may be provided to the controller 710 and/or stored in the memory of the controller 710. The controller 710 may be further configured to adjust the rotation speed $\omega$ by sending an electronic signal to a fan motor. In this way, the controller 710 may be used to adjust the rotation speed $\omega$ of the respective flow generator 724, 744, 764 to the calibrated rotation speed $\omega_{Cal}$. In some embodiments, once the calibrated rotation speed $\omega_{Cal}$ is reached by the respective flow generator 724, 744, 764, the fan speed of the respective flow generator 724, 744, 764 may be monitored by the controller 710 and/or not maintained at the calibrated rotation speed $\omega_{Cal}$.

As has already been explained, the backpressure testing unit 730 may comprise one or more testing positions 722, 742, 762 and respective backpressure sensors 726, 746, 766 and respective flow generators 724, 744, 764. In some embodiments, the controller 710 may be configured to carry out step b) for each testing position 722, 742, 762 individually and/or contemporaneously. In some embodiments, the calibrated flow $\omega_{Cal}$ for each testing positions 722, 742, 762 may be equivalent. However, due to variability in the backpressure testing unit 730 and/or in order to increase the accuracy of the results, it is preferable to determine the calibrated flow $\omega_{Cal}$ individually for each of the one or more position testing positions 722, 742, 762.

As explained above, the method 1000 of backpressure testing manufactured parts 250 further comprises:

c) setting an upper backpressure limit and a lower backpressure limit for each of the one or more testing positions.

In some embodiments, the step c) comprises setting the upper backpressure limit and the lower backpressure limit as a multiple x of the reference backpressure measurement $P_R$ and/or a pressure offset from the reference backpressure measurement $P_R$. As such, the upper backpressure limit may be $P_R + xP_R$ and the lower backpressure limit may be $P_R - xP_R$

In some embodiments, the step c) comprises using one or more upper limit reference parts and one or more lower limit reference parts.

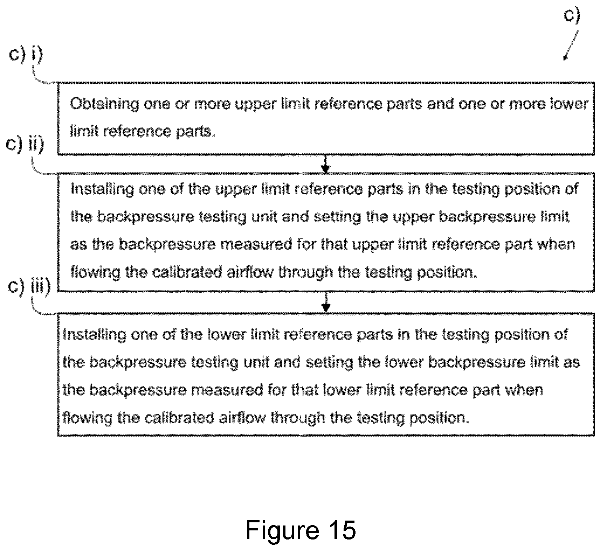

Figure 15 shows an embodiment of the step c) of setting an upper backpressure limit and a lower backpressure limit for each of the one or more testing positions using one or more upper limit reference parts and one or more lower limit reference parts. In the embodiment shown in Figure 15, the step c) of setting the upper backpressure limit and the lower backpressure limit for each of the one or more testing positions comprises:

> c) i) obtaining one or more upper limit reference parts and one or more lower limit reference parts;
> c) ii) installing one of the upper limit reference parts in the testing position 722, 742, 762 of the backpressure testing unit 730 and setting the upper backpressure limit as the backpressure measured for that upper limit reference part when flowing the calibrated flow through the testing position 722, 742, 762;
> c) iii) installing one of the lower limit reference parts in the testing position 722, 742, 762 of the backpressure testing unit 730 and setting the lower backpressure limit as the backpressure measured for that lower limit reference part when flowing the calibrated flow through the testing position 722, 742, 762.

The upper backpressure limit may be the backpressure of the upper limit reference part when tested on the backpressure testing unit $P_U$. The lower backpressure limit may be the backpressure of the lower limit reference part when tested on the backpressure testing unit $P_L$.

How each of the steps c) i) to c) iii) may be carried out will now be explained in more detail. The one or more upper limit reference parts may comprises one or more similar parts configured to provide an upper limit reference at the one or more testing positions 722, 742, 762. In this way, the one or more upper limit reference parts may be used to calibrate the upper limit at the one or more testing positions 722, 742, 762 contemporaneously. Similarly, the one or more lower limit reference parts may comprise one or more similar parts configured to provide a lower limit reference at the one or more testing positions 722, 742, 762. In this way, the one or more lower limit reference parts may be used to calibrate the lower limit at the one or more testing positions 722, 742, 762 contemporaneously. Alternatively, one of the upper limit reference parts and one of the lower limit reference parts may be used to calibrate the one or more testing positions 722, 742, 762 may be calibrated sequentially.

In step c) i), one or more upper limit reference parts and one or more lower limit reference parts may be obtained. The one or more upper limit reference parts and the one or more lower limit reference parts may comprise orifice plates. As has been explained previously, by varying the relative diameter $\beta$ (or another geometrical parameter) of the orifice plate, it is possible to change the backpressure of the orifice plate. In some embodiments, the upper limit reference part may comprise an orifice plate with an increased backpressure compared with the reference part. In some embodiments, the lower limit reference part may comprise an orifice plate with a decreased backpressure compared with the reference part. For example, the lower limit reference part may have a lower relative diameter compared with the upper limit reference part. As has also been explained previously, the backpressure of an orifice plate may be increased with a smaller relative diameter. As such, the lower limit reference part may comprise an orifice plate with a larger relative diameter compared with the relative diameter of an upper limit reference part, the upper limit reference part comprising an orifice plate. In some embodiments, the reference part may comprise an orifice plate. In some embodiments, the relative diameter of the lower limit reference part $\beta_L$, the relative diameter of the upper limit reference part $\beta_U$, and the relative diameter of the reference part $\beta_R$ may be related by the following inequality:

$$\beta_L > \beta_R > \beta_U \qquad (10)$$

In some embodiments, the backpressure of the lower limit reference part when tested on the reference testing unit $P_L'$ may be lower compared with the backpressure of the reference part when or if tested on the reference testing unit $P_R'$. In some embodiments, the backpressure of the upper limit reference part when tested on the reference testing unit $P_U'$ may be higher compared with the backpressure of the reference part when or if tested on the reference testing unit $P_R'$. As has already been explained, with the flow generator 724, 744, 764 of the backpressure testing unit 730 at the calibrated rotation speed $\omega_{Cal}$, the backpressure of the reference part when tested on the backpressure testing unit $P_R$ may be equal to the backpressure of the reference part when or if tested on the reference testing unit $P_R'$. However, as explained in the above discussion of Figure 9, with the flow generator 724, 744, 764 of the backpressure testing unit 730 at the calibrated rotation speed $\omega_{Cal}$, the backpressure of the lower limit reference part when tested on the backpressure testing unit $P_L$ may be numerically different to the backpressure of the lower limit reference part when tested on the reference testing unit $P_L'$. Similarly, with the flow generator 724, 744, 764 of the backpressure testing unit 730 at the calibrated rotation speed $\omega_{Cal}$, the backpressure of the upper limit reference part when tested on the backpressure testing unit $P_U$ may be numerically different to the backpressure of the upper limit reference part when tested on the reference testing unit $P_U'$. Summarising the above with the flow generator 724, 744, 764 of the backpressure testing unit 730 at the calibrated rotation speed $\omega_{Cal}$, the following may be true:

$$P_R = P_R'$$

$$P_U \neq P_U' \qquad (11)$$

$$P_L \neq P_L'$$

However, as was also explained in the above discussion of Figure 9, because the relationship between the backpressure on the backpressure testing unit P is an increasing function of the backpressure on the reference testing unit P', if may follow that if:

a backpressure of the manufactured part 250 on the backpressure testing unit $P_M$ is between the backpressure of the lower limit reference part when tested on the backpressure testing unit $P_L$ and the backpressure of the upper limit reference part when tested on the backpressure testing unit $P_U$; then it follows that:

the backpressure of the manufactured part 250 if tested on the reference testing unit $P_M'$ would also be between the backpressure of the lower limit reference part when tested on the reference testing unit $P_L'$ and the backpressure of the upper limit reference part when tested on the reference testing unit $P_U'$. Summarising the above, it follows that if:

$$P_L < P_M < P_U \qquad (12)$$

is true, then it follows that

$$P_L' < P_M' < P_U' \qquad (13)$$

is also true. As such, it may be determined that the manufactured part 250 would have a backpressure within the upper and lower limit if tested on the reference testing unit 400, without the need to test the manufactured part 250 on the reference testing unit 400.

In some embodiments, the appropriate diameters for the upper limit reference part and the lower limit reference part may be determined theoretically, for example by using the standards set by ISO 5167-2 and/or by using fluid dynamic computational modelling. Alternatively, or additionally, the diameter of the upper limit reference part and the lower limit reference part may be determined experimentally using the reference testing unit 400. For example, a range of diameters may be trialled until a part with an appropriate backpressure is obtained.

In step c) ii), the upper limit reference part may be installed on one of the one or more testing positions of the backpressure testing unit 730. For example, the robotic arm 860 may be used to install the upper limit reference part on one of the one or more testing positions 722, 724, 726. The respective flow generator 724, 744, 764 may then be used to provide the calibrated flow through the respective testing position 722, 742, 762 by setting the respective flow generator 724, 744, 764 to the calibrated rotation speed $\omega_{Cal}$. A backpressure measurement may then be made by the respective backpressure sensor 726, 746, 766 of the upper limit reference part in one of the one or more testing positions 722, 742, 762. As explained above, the measurements made by the backpressure testing unit 730 may correspond with but be numerically different to the measurements made by the reference testing unit 400.

In step c) iii), the upper limit reference part may be installed on one of the one or more testing positions of the backpressure testing unit 730. For example, the robotic arm 860 may be used to install the upper limit reference part on one of the one or more testing positions 722, 742. 762. The respective flow generator 724, 744, 764 may then be used to provide the calibrated flow through the respective testing position 722, 742. 762 by setting the respective flow generator 724, 744, 764 to the calibrated rotation speed $\omega_{Cal}$. A backpressure measurement may then be made by the respective backpressure sensor 726, 746, 766 of the upper limit reference part in one of the one or more testing positions 722, 742, 762. As explained above, the measurements made by the backpressure testing unit 730 may correspond with but be numerically different to the measurements made by the reference testing unit 400.

As explained above, the method 1000 of backpressure testing manufactured parts further comprises: d) thereafter using the one or more testing positions 722, 742, 762 to assess the backpressure of one or more manufactured parts 250;

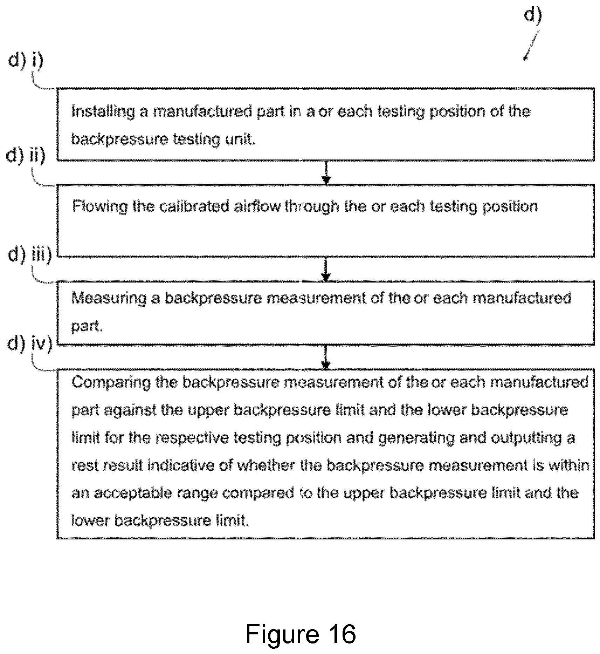

Figure 16 shows an embodiment of the step d) of using the one or more testing positions to assess the backpressure of one or more manufactured parts.

In some embodiments, using the one or more testing positions to assess the backpressure of one or more manufactured parts 250 in step d) comprises:

d) i) installing the manufactured part 250 in the or each testing position 722, 742, 762 of the backpressure testing unit 730;
d) ii) flowing the calibrated flow determined from step b) iii) through the or each testing position 722, 742, 762;
d) iii) measuring a backpressure measurement of the or each manufactured part 250;
d) iv) comparing the backpressure measurement of the or each manufactured part 250 against the upper backpressure limit and the lower backpressure limit for the respective testing position and generating and outputting a rest result indicative of whether the backpressure measurement is within an acceptable range compared to the upper backpressure limit and the lower backpressure limit .

How each of the steps d) i) to d) iv) may be carried out will now be explained in more detail. The or each manufactured part referred to in steps d) i) to d) iv) may comprise the or each manufactured part for backpressure testing. For example, the or each manufactured part referred to in steps d) i) to d) iv) may comprise manufactured parts for backpressure testing obtained from the manufacturing station 832.

In step d) i), the or each manufactured part 250 may be installed on one of the one or more testing positions 722, 742, 762 of the backpressure testing unit 730. For example, the robotic arm 860 may be used to install the or each manufactured part 250 on one of the one or more testing positions 722, 742, 762.

In step d) ii), the flow generator 724, 744, 764 may be used to flow air through the testing position 722, 724, 726. As has already been explained, the flow generator 724, 744, 764 is operated at the calibrated rotation speed $\omega_{Cal}$ determined in step (b).

In step d) iii)..the backpressure measurement of the or each manufactured part $P_M$ may be measured by the respective backpressure sensor 726, 746, 766. The backpressure measurement may be provided to the controller 710.

In step d) iv), whether or not the backpressure measurement is within an acceptable range is determined. For example, the controller 730 may evaluate whether the inequality:

$$P_L < P_M < P_U \qquad (14)$$

is true. Alternatively, in an embodiment where the upper backpressure limit and the lower backpressure limit are set by multiples/fractions x of the backpressure of the reference part when tested on the backpressure testing unit $P_R$, the controller 730 may evaluate whether the inequality:

$$P_R - xP_R < P_M < P_R + xP_R \qquad (15)$$

is true. In some embodiments, upper back pressure limit and the lower back pressure limit include an offset to account for the precision of the test. However the upper and lower limits are provided, if the inequality (14) and/or (15) is true, then the $P_M$ may be within an acceptable range, and the manufactured part 250 may be assigned a positive result. In particular, it may be determined from the above that the backpressure of the manufactured part if tested on the reference testing unit $P_M'$ would also be within an acceptable range. In some embodiments, the unique identifier of the manufactured part may be scanned to associate the manufactured part with the positive result. If the inequality (14) and/or (15) is false, then the $P_M$ may not be within an acceptable range, and the manufactured part 250 may be assigned a negative result. In particular, it may be determined from the above that the backpressure of the manufactured part if tested on the reference testing unit $P_M'$ would also be not be within an acceptable range. In some embodiments, the unique identifier of the manufactured part 250 may be scanned to associate the manufactured part 250 with the negative result.

In some embodiments, the method 1000 further comprises:

e) periodically verifying the backpressure measurements at the one or more testing positions 722, 742, 762 by assessing the backpressure of one or more verification reference parts at each of the one or more testing positions 722, 742, 762.

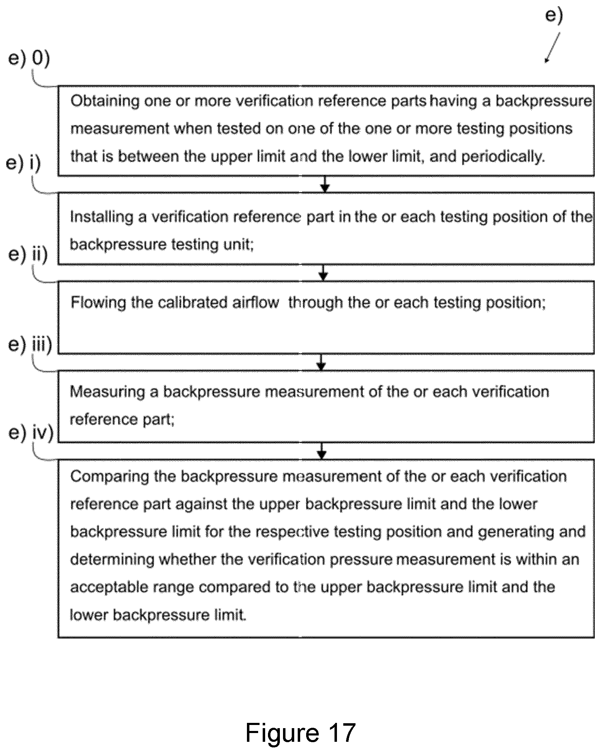

Figure 17 shows an embodiment of the step e) of periodically validating the backpressure measurements at the one or more testing positions by assessing the backpressure of one or more verification reference parts at each of the one or more testing positions.

In some embodiments, the step e) may comprise a step e) 0) of obtaining one or more verification reference parts having a backpressure measurement when tested on one of the backpressure testing unit $P_V$ that is between the upper backpressure limit and the lower backpressure limit. The calibration of the respective backpressure sensor 726, 746, 766 the calibrated rotation speed provided by the respective flow generator 724, 744, 764, dirt or dust introduced into the system, temperature fluctuations, may cause the backpressure measurements determined by the backpressure sensor 726 to increase and/or decrease relative to previous measurements by the same backpressure sensor 726. As such, it is possible that manufactured parts 250 may be incorrectly assigned a negative result and/or incorrectly assigned a positive result. To avoid such a scenario, the method 1000 may further comprise the step e) of periodically validating the method 1000. The step e) 0) may comprise determining a backpressure measurement of a verification reference part on the backpressure testing unit $P_V$. In some embodiments, $P_V$ may be between $P_L$ and $P_U$.

Step e) 0) may comprise obtaining one or more verification reference parts having a backpressure measurement when tested on backpressure testing unit $P_V$ that is between the upper backpressure limit and the lower backpressure limit. The verification reference part may be equivalent to the reference part, for example $P_V$ may be equal to $P_R$. In some embodiments, the verification reference part may comprise an orifice plate 100. In some embodiments, the verification reference part may comprise a filter 300.

Once the verification reference part has been obtained in step e) 0), the verification reference part may be tested similarly to how the manufactured parts 250 are tested. For example, the verification reference part may be tested by periodically:

e) i) installing the verification reference part in the or each testing position 722, 742, 762 of the backpressure testing unit;

e) ii) flowing the calibrated flow determined from step b) iii) through the or each testing position 722, 742, 762;

e) iii) measuring a backpressure measurement of the or each verification reference part;

e) iv) comparing the backpressure measurement of the or each verification reference part against the upper backpressure limit and the lower backpressure limit for the respective testing position 722, 742, 762 and generating and determining whether the verification pressure measurement is within an acceptable range compared to the upper backpressure limit and the lower backpressure limit.

In step e) i), the verification part may be installed on one of the one or more testing positions of the backpressure testing unit 730. For example, the robotic arm 860 may be used to install the upper limit reference part on one of the one or more testing positions 722, 742, 762.

In step e) ii), the flow generator 724, 744, 764 may be used to create a flow through the testing position 722, 724, 726. As has already been explained, the flow generator 722, 742, 762 may be operated at the calibrated rotation speed $\omega_{Cal}$ determined in step (b).

In step e) iii), the backpressure measurement of the verification part on the backpressure testing unit $P_V$ may be measured by the respective backpressure sensor 726, 746, 766. The backpressure measurement of the verification part on the backpressure testing unit $P_V$ may be provided to the controller.

In step e) iv), whether or not the backpressure measurement of the verification part on the backpressure testing unit $P_V$ is within an acceptable range may be determined. For example, the controller 730 may evaluate whether the inequality:

$$P_L < P_V < P_U \qquad (16)$$

is true. Alternatively, in an embodiment where the upper backpressure limit and the lower backpressure limit are set by multiples/fractions x of the backpressure of the reference part when tested on the backpressure testing unit $P_R$, the controller 730 may evaluate whether the inequality:

$$P_R - xP_R < P_V < P_R + xP_R \qquad (17)$$

is true. In some embodiments, the upper back pressure limit and the lower back pressure limit include an offset to account for the precision of the test. However the upper and lower limits are provided, if the inequality (16) and/or (17) is true, then the $P_V$ may be within an acceptable range. This in turn may indicate that backpressure measurements by the backpressure sensor 726 have not increased and/or decreased relative to previous measurements by the same backpressure sensor 726. As such, based on the inequality (16) and/or (17) being true, measurements of manufactured parts in step d) may be validated.

In some embodiments, a number of previously tested manufactured parts and/or a number of subsequently tested manufactured parts are validated. In some embodiments, manufactured parts tested within a time window of the determination that the inequality is true may be validated. If the inequality is false, then the $P_V$ may not be within an acceptable range. This in turn may indicate that backpressure measurements by the backpressure sensor 726, 746, 766 have increased and/or decreased relative to previous measurements by the same backpressure sensor 726. As such, based on the inequality being false, measurements of manufactured parts in step d) may be invalidated. In some embodiments, a number of previously tested manufactured parts 250 and/or a number of subsequently tested manufactured parts 250 are invalidated. In some embodiments, manufactured parts 250 tested within a time window of the determination that the inequality is false may be invalidated.

In some embodiments, validating a manufactured part 250 may comprise using the controller 710 to associate a validation signal with the unique identifier of the manufactured part. In some embodiments, invalidating a manufactured part may comprise using the controller to associate an invalidation signal with the unique identifier of the manufactured part.

The controller 710 may be configured to carry out the above steps periodically by carrying out steps e) i) to e) iv) every 1s, every 100s, every 1000s, every 10,000s of operation of method 1000. The controller 710 may be configured to carry out the above steps periodically by carrying out steps 1920 to 1980 before and/or after each measurement of the manufactured part for backpressure testing, before and/or after measurement of 10 manufactured parts for backpressure testing, before and/or after measurement of 100 manufactured parts for backpressure testing, before and/or after measurement of 1000 manufactured parts for backpressure testing.

As has been explained above, the manufactured part 250 may comprise a filter 300. In some embodiments, the manufactured part 250 may comprise a filter 300 such as a catalytic filter for use in an exhaust system. The filter 300 may comprise pores through which a flow may pass, such that one or more components of the flow may be blocked and/or catalysed by the filter 300. In some embodiments, not shown in the Figures, the filter 300 may comprise a planar sheet of material comprising the pores. In some embodiments, as shown schematically in Figure 4, the filter 300 may comprise one or more plugs 922, 924, 926, 942, 944, 946, and one or more channels, 943, 945, 947, 923, 925, 927. As has already been explained, the flow may travel through the walls 903, 905, 907, the walls comprising the pores.

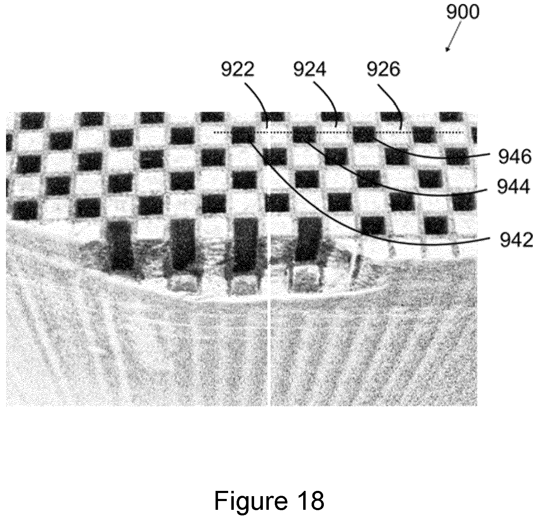

Figure 18 shows a photograph of a top view of the catalytic filter 900, generally structured similarly to the filter 300 shown schematically as a side view in Figure 4. The dotted line in Figure 18 and Figure 4 may indicate the same direction. The catalytic filter 900 comprises channels 942, 944, 946 and plugs 922, 924, and 926. The flow may travel through the channels 942, 944, 946, through the walls and out through a set of channels located beneath the plugs 922, 924, 926, the channels beneath the plugs 922, 924, 926 not being visible in the Figure. The chequerboard structure of the filter 900 ensures the flow must pass through the pores in the walls to pass through the filter 900.

**Claims**

1. A method (1000) of backpressure testing manufactured parts (250), the method (1000) comprising:

    a) obtaining one or more reference parts and determining a reference backpressure measurement for each reference part indicative of the backpressure of that reference part when or if tested on a reference testing unit (400);
    b) calibrating one or more testing positions (722, 742, 762) of a backpressure testing unit (730) using the one or more reference parts;
    c) setting an upper backpressure limit and a lower backpressure limit for each of the one or more testing positions (722, 742, 762); and
    d) thereafter using the one or more testing positions (722, 742, 762) to assess the backpressure of one or more manufactured parts (250); wherein, calibrating the one or more testing positions (722, 742, 762) of the backpressure testing unit (730) in step b) comprises:

        b) i) installing one of the reference parts in a or each testing position (722, 742, 762) of the backpressure testing unit (730);
        b) ii) creating a flow through the or each testing position (722, 742, 762);
        b) iii) establishing a calibrated flow for the or each testing position (722, 742, 762) by adjusting the flow through the or each testing position (722, 742, 762) until a backpressure measurement of the reference part in the or each testing position (722, 742, 762) corresponds to the reference backpressure measurement of the respective reference part;
        b) iv) thereafter using the calibrated flow for the or each testing position (722, 742, 762) during step d);

    wherein, using the one or more testing positions (722, 742, 762) to assess the backpressure of one or more manufactured parts (250) in step d) comprises:

        d) i) installing a manufactured part (250) in a or each testing position (722, 742, 762) of the backpressure testing unit (730);
        d) ii) flowing the calibrated flow determined from step b) iii) through the or each testing position (722, 742, 762);

        d) iii) measuring a backpressure measurement of the or each manufactured part (250);
        d) iv) comparing the backpressure measurement of the or each manufactured part (250) against the upper backpressure limit and the lower backpressure limit for the respective testing position (722, 742, 762) and generating and outputting a test result indicative of whether the backpressure measurement is within an acceptable range compared to the upper backpressure limit and the lower backpressure limit.

2. The method (1000) of claim 1, wherein determining the reference backpressure measurement for each reference part indicative of the backpressure of that reference part when or if tested on the reference testing unit (400) in step a) comprises:

    - measuring a backpressure of that reference part on the reference testing unit (400); and/or
    - calculating a backpressure of that reference part to simulate testing that reference part on the reference testing unit (400).

3. The method (1000) of claim 1 or claim 2, wherein the indicative backpressure of the or each reference part when or if tested on a reference testing unit (400) is for a specified air flow rate of the reference testing unit (400).

4. The method (1000) of any preceding claim, wherein setting the upper backpressure limit and the lower backpressure limit for each of the one or more testing positions (722, 742, 762) in step c) comprises:

    - obtaining one or more upper limit reference parts and one or more lower limit reference parts;
    - installing one of the upper limit reference parts in the testing position (722, 742, 762) of the backpressure testing unit (730) and setting the upper backpressure limit as the backpressure measured for that upper limit reference part when flowing the calibrated flow through the testing position (722, 742, 762);
    - installing one of the lower limit reference parts in the testing position (722, 742, 762) of the backpressure testing unit (730) and setting the lower backpressure limit as the backpressure measured for that lower limit reference part when flowing the calibrated flow through the testing position (722, 742, 762).

5. The method (1000) of any one of claims 1 to 3, wherein setting the upper backpressure limit and the lower backpressure limit for each of the one or more testing positions (722, 742, 762) in step c) comprises setting the upper backpressure limit and the lower backpressure limit as a percentage of the reference backpressure measurement and/or an absolute pressure offset from the reference backpressure measurement.

6. The method (1000) of any preceding claim, further comprising:
obtaining one or more verification reference parts having a backpressure measurement when tested on one of the one or more testing positions (722, 742, 762) that is between the upper limit and the lower limit, and periodically:

    i) installing a verification reference part in the or each testing position (722, 742, 762) of the backpressure testing unit (730);
    ii) flowing the calibrated flow determined from step b) iii) through the or each testing position (722, 742, 762);
    iii) measuring a backpressure measurement of the or each verification reference part;
    iv) comparing the backpressure measurement of the or each verification reference part against the upper backpressure limit and the lower backpressure limit for the respective testing position (722, 742, 762) and generating and determining whether the verification pressure measurement is within an acceptable range compared to the upper backpressure limit and the lower backpressure limit.

7. The method (1000) of any preceding claim, wherein one or more of the reference parts and/or upper limit reference parts and/or lower limit reference parts and/or verification reference parts is an orifice plate (100).

8. The method (1000) of any preceding claim, wherein the one or more manufactured parts (250) are flow through substrates or filter substrates for purification of exhaust gases.

9. The method (1000) of any preceding claim further comprising a robotic arm (850) for automatic placing of calibration reference parts, verification reference parts, and/or manufactured parts (250).

10. The method (1000) of any preceding claim, wherein the or each of the one or more manufactured parts (250) comprises a unique identifier.

11. The method (1000) of claim 10, wherein the unique identifier is a barcode.

12. A controller (710) configured to carry out the method (1000) of any one of claims 1 to 11.

13. A system (700, 800) for backpressure testing of manufactured parts (250), comprising

    the controller (710) of claim 12; and
    a backpressure testing unit (730) comprising:

        one or more testing positions (722, 742, 762) configured to accommodate a manufactured part (250) and/or a reference part;
        a flow generator (724, 744, 764) configured to create a flow through each testing position (722, 742, 762); and
        a backpressure sensor (726, 746, 766) configured to measure backpressure at each testing position (722, 742, 762).

14. The system (800) of claim 13 further comprising a robotic arm (850) for automatic placing of one or more manufactured parts (250) and/or reference parts at the one or more testing positions (722, 742, 762).

**Patentansprüche**

1. Verfahren (1000) zum Gegendruckprüfen von hergestellten Teilen (250), das Verfahren (1000) umfassend:

    a) Erhalten eines oder mehrerer Referenzteile und Bestimmen einer Referenzgegendruckmessung für jedes Referenzteil, die den Gegendruck dieses Referenzteils angibt, wenn oder falls es auf einer Referenzprüfeinheit (400) geprüft wird;
    b) Kalibrieren einer oder mehrerer Prüfpositionen (722, 742, 762) einer Gegendruckprüfeinheit (730) unter Verwendung des einen oder der mehreren Referenzteile;
    c) Einstellen einer oberen Gegendruckgrenze und einer unteren Gegendruckgrenze für jede der einen oder der mehreren Prüfpositionen (722, 742, 762); und
    d) anschließend Verwenden der einen oder der mehreren Prüfpositionen (722, 742, 762), um den Gegendruck eines oder mehrerer hergestellter Teile (250) zu beurteilen;
    wobei das Kalibrieren der einen oder der mehreren Prüfpositionen (722, 742, 762) der Gegendruckprüfeinheit (730) in Schritt b) umfasst:

        b) i) Einbauen eines der Referenzteile in einer oder jeder Prüfposition (722, 742, 762) der Gegendruckprüfeinheit (730);
        b) ii) Erzeugen einer Strömung durch die oder jede Prüfposition (722, 742, 762);
        b) iii) Festlegen einer kalibrierten Strömung für die oder jede Prüfposition (722, 742, 762) durch Anpassen der Strömung durch die oder jede Prüfposition (722, 742, 762), bis eine Gegendruckmessung des Referenzteils in der oder jeder Prüfposition (722, 742, 762) der Referenzgegendruckmessung des jeweiligen Referenzteils entspricht;

b) iv) anschließend Verwenden der kalibrierten Strömung für die oder jede Prüfposition (722, 742, 762) während Schritt d);

wobei das Verwenden der einen oder der mehreren Prüfpositionen (722, 742, 762), um den Gegendruck eines oder mehrerer hergestellter Teile (250) in Schritt d) zu beurteilen, umfasst:

d) i) Einbauen eines hergestellten Teils (250) in einer oder jeder Prüfposition (722, 742, 762) der Gegendruckprüfeinheit (730);

d) ii) Strömenlassen der aus Schritt b) iii) bestimmten kalibrierten Strömung durch die oder jede Prüfposition (722, 742, 762);

d) iii) Messen einer Gegendruckmessung des oder jedes hergestellten Teils (250);

d) iv) Vergleichen der Gegendruckmessung des oder jedes hergestellten Teils (250) mit der oberen Gegendruckgrenze und der unteren Gegendruckgrenze für die jeweilige Prüfposition (722, 742, 762) und Erzeugen und Ausgeben eines Prüfergebnisses, das angibt, ob die Gegendruckmessung verglichen mit der oberen Gegendruckgrenze und der unteren Gegendruckgrenze innerhalb eines akzeptablen Bereichs liegt.

2. Verfahren (1000) nach Anspruch 1, wobei das Bestimmen der Referenzgegendruckmessung für jedes Referenzteil, die den Gegendruck dieses Referenzteils angibt, wenn oder falls es in Schritt a) auf der Referenzprüfeinheit (400) geprüft wird, umfasst:

- Messen eines Gegendrucks dieses Referenzteils auf der Referenzprüfeinheit (400); und/oder
- Berechnen eines Gegendrucks dieses Referenzteils, um ein Prüfen dieses Referenzteils auf der Referenzprüfeinheit (400) zu simulieren.

3. Verfahren (1000) nach Anspruch 1 oder 2, wobei der angegebene Gegendruck des oder jedes Referenzteils, wenn oder falls es auf einer Referenzprüfeinheit (400) geprüft wird, für eine spezifizierte Luftstromgeschwindigkeit der Referenzprüfeinheit (400) gilt.

4. Verfahren (1000) nach einem der vorstehenden Ansprüche, wobei das Einstellen der oberen Gegendruckgrenze und der unteren Gegendruckgrenze für jede der einen oder der mehreren Prüfpositionen (722, 742, 762) in Schritt c) umfasst:

- Erhalten eines oder mehrerer Referenzteile der oberen Grenze und eines oder mehrerer Referenzteile der unteren Grenze;
- Einbauen eines der Referenzteile der oberen Grenze in der Prüfposition (722, 742, 762) der Gegendruckprüfeinheit (730) und Einstellen der oberen Gegendruckgrenze als den Gegendruck, der für dieses Referenzteil der oberen Grenze gemessen wird, wenn die kalibrierte Strömung durch die Prüfposition (722, 742, 762) strömengelassen wird;
- Einbauen eines der Referenzteile der unteren Grenze in der Prüfposition (722, 742, 762) der Gegendruckprüfeinheit (730) und Einstellen der unteren Gegendruckgrenze als den Gegendruck, der für dieses Referenzteil der unteren Grenze gemessen wird, wenn die kalibrierte Strömung durch die Prüfposition (722, 742, 762) strömengelassen wird.

5. Verfahren (1000) nach einem der Ansprüche 1 bis 3, wobei das Einstellen der oberen Gegendruckgrenze und der unteren Gegendruckgrenze für jede der einen oder der mehreren Prüfpositionen (722, 742, 762) in Schritt c) das Einstellen der oberen Gegendruckgrenze und der unteren Gegendruckgrenze als einen Prozentsatz der Referenzgegendruckmessung und/oder einen Absolutdruckversatz von der Referenzgegendruckmessung umfasst.

6. Verfahren (1000) nach einem der vorstehenden Ansprüche, ferner umfassend:
Erhalten eines oder mehrerer Verifizierungsreferenzteile, die, wenn sie an einer der einen oder der mehreren Prüfpositionen (722, 742, 762) geprüft werden, eine Gegendruckmessung, die zwischen der oberen Grenze und der unteren Grenze liegt, aufweisen, und periodisch:

i) Einbauen eines Verifizierungsreferenzteils in der oder jeder Prüfposition (722, 742, 762) der Gegendruckprüfeinheit (730);

ii) Strömenlassen der aus Schritt b) iii) bestimmten kalibrierten Strömung durch die oder jede Prüfposition (722, 742, 762);

iii) Messen einer Gegendruckmessung des oder jedes Verifizierungsreferenzteils;

iv) Vergleichen der Gegendruckmessung des oder jedes Verifizierungsreferenzteils mit der oberen Gegendruckgrenze und der unteren Gegendruckgrenze für die jeweilige Prüfposition (722, 742, 762) und Erzeugen und Bestimmen, ob die Verifizierungsdruckmessung verglichen mit der oberen Gegendruckgrenze und der unteren Gegendruckgrenze innerhalb eines akzeptablen Bereichs liegt.

**7.** Verfahren (1000) nach einem der vorstehenden Ansprüche, wobei eines oder mehrere der Referenzteile und/oder der Referenzteile der oberen Grenze und/oder der Referenzteile der unteren Grenze und/oder der Verifizierungsreferenzteile eine Blende (100) ist.

**8.** Verfahren (1000) nach einem der vorstehenden Ansprüche, wobei das eine oder die mehreren hergestellten Teile (250) Durchflusssubstrate oder Filtersubstrate für eine Reinigung von Abgasen sind.

**9.** Verfahren (1000) nach einem der vorstehenden Ansprüche, ferner umfassend einen Roboterarm (850) zum automatischen Platzieren von Kalibrierungsreferenzteilen, Verifizierungsreferenzteilen und/oder hergestellten Teilen (250).

**10.** Verfahren (1000) nach einem der vorstehenden Ansprüche, wobei das oder jedes des einen oder der mehreren hergestellten Teile (250) einen eindeutigen Bezeichner umfasst.

**11.** Verfahren (1000) nach Anspruch 10, wobei der eindeutige Bezeichner ein Strichcode ist.

**12.** Steuervorrichtung (710), die konfiguriert ist, um das Verfahren (1000) nach einem der Ansprüche 1 bis **11** auszuführen.

**13.** System (700, 800) zum Gegendruckprüfen von hergestellten Teilen (250), umfassend

die Steuervorrichtung (710) nach Anspruch 12; und
eine Gegendruckprüfeinheit (730), umfassend:

eine oder mehrere Prüfpositionen (722, 742, 762), die konfiguriert sind, um ein hergestelltes Teil (250) und/oder ein Referenzteil aufzunehmen;
einen Strömungsgenerator (724, 744, 764), der konfiguriert ist, um eine Strömung durch jede Prüfposition (722, 742, 762) zu erzeugen; und
einen Gegendrucksensor (726, 746, 766), der konfiguriert ist, um Gegendruck an jeder Prüfposition (722, 742, 762) zu messen;

**14.** System (800) nach Anspruch 13, ferner umfassend einen Roboterarm (850) zum automatischen Platzieren eines oder mehrerer hergestellter Teile (250) und/oder Referenzteile an der einen oder den mehreren Prüfpositionen (722, 742, 762).

**Revendications**

**1.** Procédé (1000) de test de contre-pression de pièces fabriquées (250), le procédé (1000) comprenant :

a) l'obtention d'une ou plusieurs pièces de référence et la détermination d'une mesure de contre-pression de référence pour chaque pièce de référence indiquant la contre-pression de cette pièce de référence lorsque ou si elle est testée sur une unité de test de référence (400) ;
b) l'étalonnage d'une ou plusieurs positions de test (722, 742, 762) d'une unité de test de contre-pression (730) à l'aide des une ou plusieurs pièces de référence ;
c) la définition d'une limite de contre-pression supérieure et d'une limite de contre-pression inférieure pour chacune des une ou plusieurs positions de test (722, 742, 762) ; et
d) l'utilisation ensuite des une ou plusieurs positions de test (722, 742, 762) pour évaluer la contre-pression d'une ou plusieurs pièces fabriquées (250) ;
dans lequel l'étalonnage des une ou plusieurs positions de test (722, 742, 762) de l'unité de test de contre-pression (730) à l'étape b) comprend :

b) i) l'installation de l'une des pièces de référence dans une ou chaque position de test (722, 742, 762) de l'unité de test de contre-pression (730) ;
b) ii) la création d'un flux à travers la ou chaque position de test (722, 742, 762) ;
b) iii) l'établissement d'un flux étalonné pour la ou chaque position de test (722, 742, 762) en ajustant le flux à travers la ou chaque position de test (722, 742, 762) jusqu'à ce qu'une mesure de contre-pression de la pièce de référence dans la ou chaque position de test (722, 742, 762) corresponde à la mesure de contre-pression de référence de la pièce de référence respective ;
b) iv) l'utilisation ensuite du flux étalonné pour la ou chaque position de test (722, 742, 762) au cours de l'étape d) ;

dans lequel l'utilisation des une ou plusieurs positions de test (722, 742, 762) pour évaluer la contre-pression d'une ou plusieurs pièces fabriquées (250) à l'étape d) comprend :

d) i) l'installation d'une pièce fabriquée (250) dans une ou chaque position de test (722, 742, 762) de l'unité de test de contre-pression (730) ;
d) ii) la circulation du flux étalonné déterminé à l'étape b) iii) par la ou chaque position de test (722, 742, 762) ;

d) iii) la mesure d'une mesure de contre-pression de la ou chaque pièce fabriquée (250) ;

d) iv) la comparaison de la mesure de contre-pression de la ou chaque pièce fabriquée (250) à la limite de contre-pression supérieure et à la limite de contre-pression inférieure pour la position de test (722, 742, 762) respective et la génération et l'émission d'un résultat de test indiquant si la mesure de contre-pression est au sein d'une plage acceptable par comparaison avec la limite de contre-pression supérieure et à la limite de contre-pression inférieure.

2. Procédé (1000) selon la revendication 1, dans lequel la détermination de la mesure de contre-pression de référence pour chaque pièce de référence indiquant la contre-pression de cette pièce de référence lorsque ou si elle est testée sur l'unité de test de référence (400) à l'étape a) comprend :

- la mesure d'une contre-pression de cette pièce de référence sur l'unité de test de référence (400) ; et/ou
- le calcul d'une contre-pression de cette pièce de référence pour simuler le test de cette pièce de référence sur l'unité de test de référence (400).

3. Procédé (1000) selon la revendication 1 ou la revendication 2, dans lequel la contre-pression indicative de la ou chaque pièce de référence lorsque ou si elle est testée sur une unité de test de référence (400) est pour un débit d'air spécifié de l'unité de test de référence (400).

4. Procédé (1000) selon une quelconque revendication précédente, dans lequel la définition de la limite de contre-pression supérieure et de la limite de contre-pression inférieure pour chacune des une ou plusieurs positions de test (722, 742, 762) à l'étape c) comprend :

- l'obtention d'une ou plusieurs pièces de référence de limite supérieure et d'une ou plusieurs pièces de référence de limite inférieure ;
- l'installation de l'une des pièces de référence de limite supérieure dans la position de test (722, 742, 762) de l'unité de test de contre-pression (730) et la définition de la limite de contre-pression supérieure comme la contre-pression mesurée pour cette pièce de référence de limite supérieure lors de la circulation du flux étalonné par la position de test (722, 742, 762) ;
- l'installation de l'une des pièces de référence de limite inférieure dans la position de test (722, 742, 762) de l'unité de test de contre-pression (730) et la définition de la limite inférieure de contre-pression comme la contre-pression mesurée pour cette pièce de référence de limite inférieure lors de la circulation du flux étalonné par la position de test (722, 742, 762).

5. Procédé (1000) selon l'une quelconque des revendications 1 à 3, dans lequel la définition de la limite de contre-pression supérieure et de la limite de contre-pression inférieure pour chacune des une ou plusieurs positions de test (722, 742, 762) à l'étape c) comprend la définition de la limite de contre-pression supérieure et de la limite de contre-pression inférieure en pourcentage de la mesure de contre-pression de référence et/ou un décalage de pression absolue par rapport à la mesure de contre-pression de référence.

6. Procédé (1000) selon une quelconque revendication précédente, comprenant en outre :
l'obtention d'une ou plusieurs pièces de référence de vérification ayant une mesure de contre-pression lorsqu'elles sont testées sur l'une des une ou plusieurs positions de test (722, 742, 762) qui est entre la limite supérieure et la limite inférieure, et périodiquement :

i) l'installation d'une pièce de référence de vérification dans la ou chaque position de test (722, 742, 762) de l'unité de test de contre-pression (730) ;
ii) la circulation du flux étalonné déterminé à l'étape b) iii) par la ou chaque position de test (722, 742, 762) ;
iii) la mesure d'une mesure de contre-pression de la ou chaque pièce de référence de vérification ;
iv) la comparaison de la mesure de contre-pression de la ou chaque pièce de référence de vérification à la limite de contre-pression supérieure et à la limite de contre-pression inférieure pour la position de test (722, 742, 762) respective et la génération et la détermination de si la mesure de pression de vérification est au sein d'une plage acceptable par comparaison avec la limite de contre-pression supérieure et à la limite de contre-pression inférieure.

7. Procédé (1000) selon une quelconque revendication précédente, dans lequel une ou plusieurs des pièces de référence et/ou des pièces de référence de limite supérieure et/ou des pièces de référence de limite inférieure et/ou des pièces de référence de vérification est une plaque d'orifice (100).

8. Procédé (1000) selon une quelconque revendication précédente, dans lequel les une ou plusieurs pièces fabriquées (250) sont des substrats de passage de flux ou des substrats de filtre pour la purification des gaz d'échappement.

9. Procédé (1000) selon une quelconque revendication précédente comprenant en outre un bras robotisé (850) pour le placement automatique de pièces de référence d'étalonnage, de pièces de référence de vérification et/ou de pièces fabriquées (250).

10. Procédé (1000) selon une quelconque revendication précédente, dans lequel la ou chacune des une ou plusieurs pièces fabriquées (250) comprend un identifiant unique.

11. Procédé (1000) selon la revendication 10, dans lequel l'identifiant unique est un code-barres.

12. Dispositif de commande (710) configuré pour mettre en œuvre le procédé (1000) selon l'une quelconque des revendications 1 à 11.

13. Système (700, 800) de test de contre-pression de pièces fabriquées (250), comprenant

le dispositif de commande (710) selon la revendication 12 ; et
une unité de test de contre-pression (730) comprenant :

une ou plusieurs positions de test (722, 742, 762) configurées pour accueillir une pièce fabriquée (250) et/ou une pièce de référence ;
un générateur de flux (724, 744, 764) configuré pour créer un flux par chaque position de test (722, 742, 762) ; et
un capteur de contre-pression (726, 746, 766) configuré pour mesurer la contre-pression au niveau de chaque position de test (722, 742, 762).

14. Système (800) selon la revendication 13 comprenant en outre un bras robotisé (850) pour le placement automatique d'une ou plusieurs pièces fabriquées (250) et/ou pièces de référence au niveau des une ou plusieurs positions de test (722, 742, 762).

Figure 1

Figure 2

Figure 3

Figure 4

730

7262
250
726
722

7264

724

Figure 5

Figure 6

Figure 7

Figure 8

Figure 9

Figure 10

Figure 11

1000

a)

Obtaining one or more reference parts and determining a reference backpressure measurement for each reference part indicative of the backpressure of that reference part when or if tested on a reference testing unit.

b)

Calibrating one or more testing positions of a backpressure testing unit using the one or more reference parts.

c)

Setting an upper backpressure limit and a lower backpressure limit for each of the one or more testing positions.

d)

Thereafter using the one or more testing positions to assess the backpressure of one or more manufactured parts.

Figure 12

a)

a) 0)

Obtaining the reference part

a) i)

Measuring a backpressure of that reference part on the reference testing unit.

a) ii)

Calculating a backpressure of that reference part to simulate testing that reference part on the reference testing unit

Figure 13

b)

b) i)

Installing one of the reference parts in a or each testing position of the backpressure testing unit.

b) ii)

Creating a flow through the or each testing position.

b) iii)

Establishing a calibrated flow for the or each testing position by adjusting the airflow through the or each testing position until a backpressure measurement of the reference part in the or each testing position corresponds to the reference backpressure measurement of the respective reference part.

c) iv)

Thereafter using the calibrated flow for the or each testing position.

Figure 14

c)

c) i)

Obtaining one or more upper limit reference parts and one or more lower limit reference parts.

c) ii)

Installing one of the upper limit reference parts in the testing position of the backpressure testing unit and setting the upper backpressure limit as the backpressure measured for that upper limit reference part when flowing the calibrated airflow through the testing position.

c) iii)

Installing one of the lower limit reference parts in the testing position of the backpressure testing unit and setting the lower backpressure limit as the backpressure measured for that lower limit reference part when flowing the calibrated airflow through the testing position.

Figure 15

d)

d) i)

Installing a manufactured part in a or each testing position of the
backpressure testing unit.

d) ii)

Flowing the calibrated airflow through the or each testing position

d) iii)

Measuring a backpressure measurement of the or each manufactured
part.

d) iv)

Comparing the backpressure measurement of the or each manufactured
part against the upper backpressure limit and the lower backpressure
limit for the respective testing position and generating and outputting a
rest result indicative of whether the backpressure measurement is within
an acceptable range compared to the upper backpressure limit and the
lower backpressure limit.

# Figure 16

e)

e) 0)

e) i) | Obtaining one or more verification reference parts having a backpressure measurement when tested on one of the one or more testing positions that is between the upper limit and the lower limit, and periodically.

e) ii) | Installing a verification reference part in the or each testing position of the backpressure testing unit;

e) iii) | Flowing the calibrated airflow through the or each testing position;

e) iv) | Measuring a backpressure measurement of the or each verification reference part;

Comparing the backpressure measurement of the or each verification reference part against the upper backpressure limit and the lower backpressure limit for the respective testing position and generating and determining whether the verification pressure measurement is within an acceptable range compared to the upper backpressure limit and the lower backpressure limit.

Figure 17

Figure 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 11226277 B2